# EUROPEAN PATENT APPLICATION

(11) **EP 4 191 482 A1**
(43) Date of publication of application: **07.06.2023**
(21) Application number: 20947748.8
(22) Date of filing: 31.07.2020
(51) Int. Cl.: G06N 20/00, G06Q 10/06, G16H 20/00

(54) **PREDICTION PROGRAM, PREDICTION METHOD, AND PREDICTION DEVICE**

(71) Applicant: FUJITSU LIMITED, Kawasaki-shi, Kanagawa 211-8588 (JP)
(72) Inventor: SEKI, Yukiko, Kawasaki-shi, Kanagawa 211-8588 (JP); OHORI, Kotaro, Kawasaki-shi, Kanagawa 211-8588 (JP)
(74) Representative: Hoffmann Eitle
(86) International application number: PCT/JP2020/029423
(87) International publication number: WO 2022/024339

(57) **Abstract**

A prediction program of an embodiment causes a computer to execute processing of listing, processing of creating, and processing of determining. In the processing of listing, combinations of feature amounts that are correlated with a target label are listed. In the processing of creating, a policy is created for achieving the target label for a prediction target based on a difference between the listed combinations of the feature amounts and a combination of feature amounts of the prediction target. In the processing of determining, appropriateness of the created policy is determined based on performance information indicating past performances.

## Description

### FIELD

An embodiment of the present invention relates to a prediction program, a prediction method, and a prediction apparatus.

### BACKGROUND

Conventionally, use of a model learned by machine learning to predict and present a policy (measure) for changing to a target class (state) is being applied to, for example, presentation of a learning policy for achieving a target to an examinee, process management for manufacturing a good product, and the like.

For the method of predicting a policy by using a model learned by machine learning in this way, there is known a prior art in which a reinforcement learning method is applied to a discrete optimization problem, a value of a corresponding action-value function is obtained from the policy, a domain of a decision variable before the policy decision, and a domain of an action-value function after the policy decision, a policy in which the action-value function is largest is searched for, and an optimum solution for problem information is searched for.

### SUMMARY

### TECHNICAL PROBLEM

However, in the prior art described above, there is a problem that a policy that is unlikely to be implemented may be presented, and the presented policy may not actually be useful. For example, in a case where there are a policy that has an action-value function slightly lower than the largest but is likely to be implemented, and a policy that has the largest action-value function but is unlikely to be implemented, the policy that is likely to be implemented is omitted from the search, and the policy that is unlikely to be implemented is presented.

In one aspect, an object is to provide a prediction program, a prediction method, and a prediction apparatus capable of presenting a feasible policy.

### SOLUTION TO PROBLEM

In one plan, a prediction program causes a computer to execute processing of listing, processing of creating, and processing of determining. In the processing of listing, combinations of feature amounts that are correlated with a target label are listed. In the processing of creating, a policy is created for achieving the target label for a prediction target based on a difference between the listed combinations of the feature amounts and a combination of feature amounts of the prediction target. In the processing of determining, appropriateness of the created policy is determined based on performance information indicating past performances.

### ADVANTAGEOUS EFFECTS OF INVENTION

It is possible to present a feasible policy.

### BRIEF DESCRIPTION OF DRAWINGS

FIG. 1 is a block diagram illustrating a functional configuration example of an information processing apparatus according to an embodiment.
FIG. 2 is a flowchart illustrating an operation example of the information processing apparatus according to the embodiment.
FIG. 3 is a flowchart illustrating an example of processing of model construction.
FIG. 4 is an explanatory diagram illustrating an example of training data.
FIG. 5 is an explanatory diagram for describing generation of a hypothesis.
FIG. 6 is an explanatory diagram for describing the generation of the hypothesis.
FIG. 7 is an explanatory diagram for describing the generation of the hypothesis.
FIG. 8 is an explanatory diagram illustrating an example of the generated hypothesis.
FIG. 9 is an explanatory diagram for describing hypotheses that match input data.
FIG. 10 is an explanatory diagram for describing weighting by logistic regression.
FIG. 11 is an explanatory diagram for describing selection of the hypothesis.
FIG. 12 is an explanatory diagram exemplifying an algorithm of a findMax function.
FIG. 13 is an explanatory diagram for describing an example of variable value assignment.
FIG. 14 is an explanatory diagram for describing an example of the variable value assignment.
FIG. 15 is an explanatory diagram for describing a specific example of the training data and performance data.
FIG. 16 is an explanatory diagram for describing a specific example of the model construction.
FIG. 17 is an explanatory diagram for describing a specific example of the input data.
FIG. 18 is an explanatory diagram for describing a specific example of an improvement measure plan.
FIG. 19 is an explanatory diagram for describing a specific example of a feasible improvement measure plan.
FIG. 20 is an explanatory diagram for describing a presentation example of the improvement measure plan.
FIG. 21 is an explanatory diagram for describing re-creation of the improvement measure plan.
FIG. 22 is an explanatory diagram for describing a presentation example of the improvement measure plan.
FIG. 23 is an explanatory diagram for describing a specific example of the training data.
FIG. 24 is an explanatory diagram for describing a specific example of the model construction.
FIG. 25 is an explanatory diagram for describing a specific example of the input data.
FIG. 26 is an explanatory diagram for describing a specific example of the improvement measure plan.
FIG. 27 is an explanatory diagram for describing a specific example of a feasible improvement measure plan.
FIG. 28 is an explanatory diagram for describing a specific example of the improvement measure plan and a score.
FIG. 29 is an explanatory diagram for describing an example of a display screen.
FIG. 30 is an explanatory diagram for describing the re-creation of the improvement measure plan.
FIG. 31 is an explanatory diagram for describing a specific example of the improvement measure plan and the score.
FIG. 32 is an explanatory diagram for describing an example of the display screen.
FIG. 33 is a block diagram illustrating an example of a computer configu ration.

### DESCRIPTION OF EMBODIMENTS

Hereinafter, a prediction program, a prediction method, and a prediction apparatus according to an embodiment will be described with reference to the drawings. Configurations having the same functions in the embodiment are denoted by the same reference signs, and redundant description will be omitted. Note that the prediction program, the prediction method, and the prediction apparatus described in the following embodiment are merely examples, and do not limit the embodiment. Furthermore, each embodiment below may be appropriately combined unless otherwise contradicted.

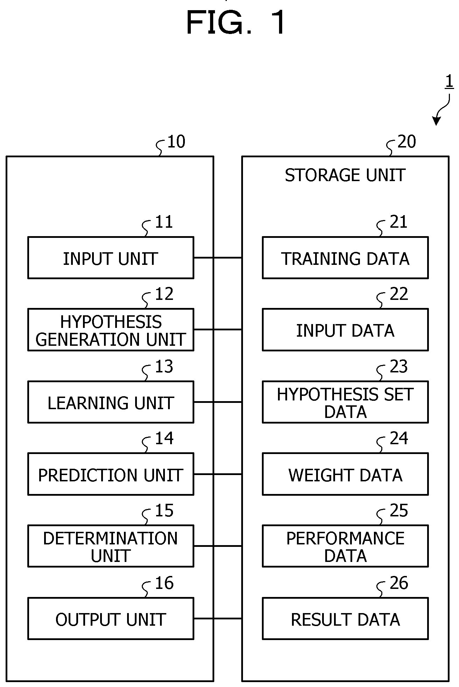

FIG. 1 is a block diagram illustrating a functional configuration example of an information processing apparatus 1 according to the embodiment.

As illustrated in FIG. 1, the information processing apparatus 1 includes a control unit 10 and a storage unit 20. The information processing apparatus 1 is an example of the prediction apparatus, and a personal computer (PC) or the like may be applied, for example.

The control unit 10 includes an input unit 11, a hypothesis generation unit 12, a learning unit 13, a prediction unit 14, a determination unit 15, and an output unit 16. The control unit 10 may be implemented by a central processing unit (CPU), a micro processing unit (MPU), or the like. Furthermore, the control unit 10 may also be implemented by hard wired logic such as an application specific integrated circuit (ASIC) or a field programmable gate array (FPGA).

The input unit 11 is a processing unit that receives input of various types of data such as training data 21 related to machine learning and input data 22 serving as a prediction target. The control unit 10 stores the training data 21 and the input data 22 whose input has been received in the storage unit 20.

The hypothesis generation unit 12 comprehensively searches for hypotheses (rules (grounds) describing that prediction is made based on objective variables) including a combination of explanatory variables from the training data 21 each having the explanatory variables and the objective variables.

Next, for each of the searched hypotheses, the hypothesis generation unit 12 classifies any of the training data 21 based on the explanatory variables and the objective variables of the training data 21, and specifies a hypothesis satisfying a specific condition. Here, the specific condition is that, for example, the number or ratio of pieces of the training data 21 classified into a predetermined class by a rule indicated by a hypothesis (combination of the explanatory variables) is a predetermined value or more. For example, for the searched hypotheses, the hypothesis generation unit 12 specifies a hypothesis that describes, based on a certain number or more of samples and (or) a certain ratio or more of samples, that the number or ratio of the pieces of the training data 21 classified by the hypothesis is the predetermined value or more and a classification result by the hypothesis belongs to a certain class. That is, the hypothesis generation unit 12 specifies a hypothesis that may correctly describe that prediction is made based on the objective variables of the training data 21.

Next, the hypothesis generation unit 12 adds the specified hypothesis to a hypothesis set. In this way, the hypothesis generation unit 12 lists, in the hypothesis set, the hypotheses that may correctly describe that prediction is made based on the objective variables of the training data 21. Next, the hypothesis generation unit 12 stores, in the storage unit 20, hypothesis set data 23 indicating the hypothesis set listing the hypotheses.

The learning unit 13 performs learning to calculate a weight of each of the plurality of hypotheses based on whether or not each of the plurality of hypotheses included in the hypothesis set of the hypothesis set data 23 is established for each piece of the training data 21. The learning unit 13 stores, as weight data 24, the weight of each of the plurality of hypotheses obtained by a learning result in the storage unit 20. The hypothesis set data 23 and the weight data 24 obtained in this way are a prediction model for obtaining a prediction result.

The prediction unit 14 is a processing unit that generates a prediction result based on the input data 22 serving as a prediction target by using the hypothesis set based on the hypothesis set data 23 and the weights of the plurality of hypotheses based on the weight data 24, in other words, by using the prediction model. The prediction unit 14 stores, as result data 26, the generated prediction result in the storage unit 20.

The input data 22 includes, for example, a known action (a part of the explanatory variable, and a combination of the feature amounts) and a target label (objective variable). For an unknown action (each of remaining explanatory variables), the prediction unit 14 predicts an optimum explanatory variable value (combination of feature amounts) that serves as the target label after the known action is performed, in other words, an optimum action by using the prediction model. Here, the label is a result (for example, pass/fail in an examination, a non-defective product/defective product in a manufacturing process) associated with a predetermined event (for example, the examination, the manufacturing process).

For example, in the manufacturing process, in the case of predicting how to control the next process to manufacture a non-defective product, the known action included in the input data 22 includes an observation value, a control setting value, or the like in the manufacturing process. Furthermore, the target label includes one indicating that a product manufactured in the manufacturing process is a non-defective product. With this configuration, the prediction unit 14 may predict how to control the next process (unknown action) to manufacture a non-defective product.

Furthermore, for example, in the case of predicting what action needs to be performed next for a customer for successful marketing, the known action included in the input data 22 includes reception contents to a user in the marketing, or the like. Furthermore, the target label includes one indicating that the marketing is successful. With this configuration, the prediction unit 14 may predict what action (unknown action) needs to be performed next for the customer for successful marketing.

Furthermore, for example, in the case of predicting what action needs to be performed next for a student to achieve a target (pass a test), the known action included in the input data 22 includes selection contents of teaching materials, lecture attendance schedule contents, or the like. Furthermore, the target label includes one indicating passing the test. With this configuration, the prediction unit 14 may predict what action (unknown action) needs to be performed next for the student for passing the test.

Specifically, the prediction unit 14 predicts, based on the prediction model by the respective hypotheses in the hypothesis set according to the hypothesis set data 23 and the weights of the respective hypotheses indicated by the weight data 24, an optimum action (each of unknown explanatory variable values) by application of values included in the input data 22 (a part of the explanatory variables and the objective variable).

Here, for the prediction model, a score function for obtaining a probability (prediction score) that a specific condition (label) is satisfied is expressed by a pseudo-Boolean function. By using the fact that the score function is expressed by the pseudo-Boolean function, the prediction unit 14 decides a variable (unknown variable) included in the pseudo-Boolean function such that the probability that a condition included in the input data 22 is satisfied satisfies a predetermined standard corresponding to the objective variable (such that the label corresponding to the objective variable is achieved).

Use of the fact that the score function is the pseudo-Boolean function has advantages that determination of an equivalent state is possible, calculation of a lower bound and an upper bound is facilitated, an existing technique (Endre Boros and Peter L. Hammer, "Pseudo-Boolean optimization", Discrete Applied Mathematics, Vol. 123, Issues 1-3, pp. 155-225, 2002.) related to pseudo-Boolean functions is applicable, and the like. Therefore, use of the fact that the prediction score (which may hereinafter be referred to as score) is expressed by a pseudo-Boolean function enables more efficient prediction than in a case where all actions are attempted one by one.

The prediction thus far is prediction of an optimum explanatory variable value (combination of feature amounts) that serves as the target label, and lists combinations of feature amounts to be targeted in the future. Next, the prediction unit 14 creates a policy for achieving the target label for the prediction target based on a difference between the listed combinations of the feature amounts and a combination of feature amounts of the prediction target. In other words, the prediction unit 14 takes the difference between the listed combinations of the feature amounts and the combination of the feature amounts of the prediction target as a policy targeted at the combinations of the feature amounts to be targeted in the future, and uses the difference as an improvement measure (policy) that serves as the target label.

Specifically, the prediction unit 14 creates a variation in a current set of variable values included in the input data 22 as the prediction target as the policy so that the current set of variable values becomes the combination of the feature amounts listed as the optimum explanatory variable value that serves as the target label.

The determination unit 15 is a processing unit that determines appropriateness of the policy created by the prediction unit 14 based on performance data 25 indicating past performances. The performance data 25 indicates a performance of changes in each feature amount as time-series data, and is an example of performance information. For example, in the case of control of a manufacturing process for manufacturing a non-defective product, the performance data 25 includes time-series data of an observation value or a control setting value in the manufacturing process. Furthermore, in the case of indicating a policy to a student to pass a test, the performance data 25 includes performances such as selection of teaching materials in an examination process, a lecture attendance schedule, or the like.

Specifically, for the variation in the combination of the feature amounts in the policy created by the prediction unit 14, the determination unit 15 counts an occurrence frequency of feature amount changes corresponding to the variation in the performance data 25. Next, by determining whether or not the counted occurrence frequency satisfies a predetermined frequency condition, the determination unit 15 determines appropriateness of the policy.

For example, when the counted occurrence frequency satisfies the predetermined frequency condition, it is considered that the variation in the combination of the feature amounts in the created policy may be sufficiently implemented, and the determination unit 15 determines that the policy is appropriate.

Furthermore, when the counted occurrence frequency does not satisfy the predetermined frequency condition, it is considered that it is difficult to implement the variation in the combination of the feature amounts in the created policy, and the determination unit 15 determines that the policy is inappropriate.

Based on a determination result of the determination unit 15, the prediction unit 14 stores, in the storage unit 20, the policy determined to be appropriate as the result data 26.

Furthermore, for a feature amount whose counted occurrence frequency does not satisfy the predetermined frequency condition, the prediction unit 14 considers the feature amount as being difficult to change, treats the feature amount as uncontrollable, and then performs re-prediction.

Specifically, the prediction unit 14 performs the prediction described above again by setting a variable of the score function as "uncontrollable" for the feature amount whose counted occurrence frequency does not satisfy the predetermined frequency condition, and re-lists the optimum explanatory variable values (combinations of feature amounts) that serve as the target label. Next, the prediction unit 14 re-creates the policy for achieving the target label for the prediction target based on a difference between the re-listed combinations of the feature amounts and the combination of the feature amounts of the prediction target. In this way, the prediction unit 14 may treat the feature amount (variable) that is difficult to change based on the past performances as uncontrollable, and narrow down the controllable variables to create the policy.

The output unit 16 is a processing unit that reads the result data 26 stored in the storage unit 20 and outputs the result data 26 to a display, a file, or the like. With this configuration, the information processing apparatus 1 outputs the prediction result predicted by the prediction unit 14 to the display, the file, or the like.

The storage unit 20 stores, for example, various types of data such as the training data 21, the input data 22, the hypothesis set data 23, the weight data 24, the performance data 25, and the result data 26.

In this way, the information processing apparatus 1 is an example of a learning apparatus and the prediction apparatus. Note that, in the present embodiment, a configuration is exemplified in which one information processing apparatus 1 performs learning and prediction in an integrated manner, but a separate information processing apparatus 1 may implement the learning and the prediction.

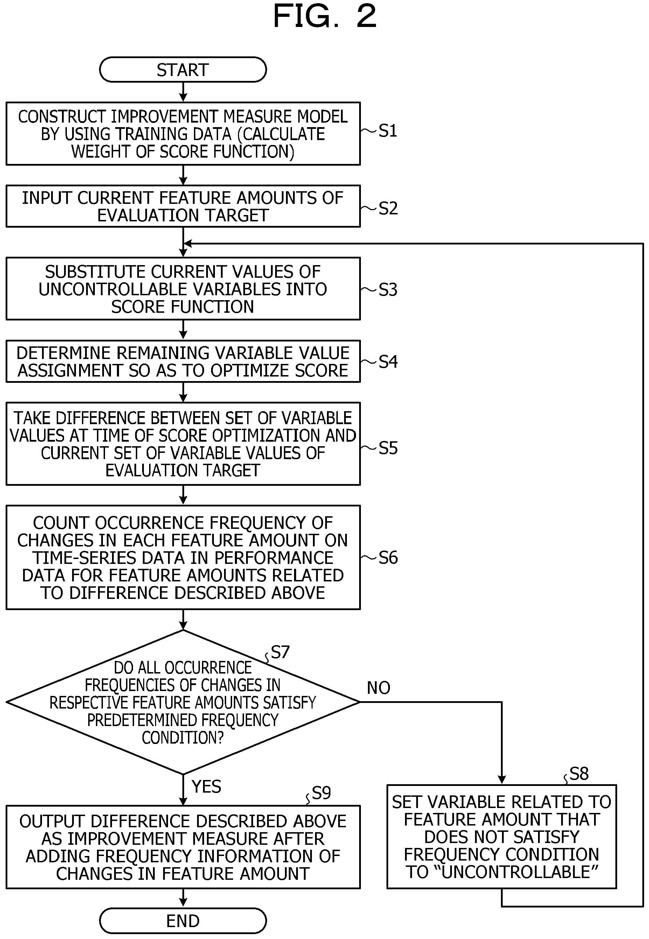

Next, processing of each of the functional units described above will be described in detail while indicating an operation example of the information processing apparatus 1. FIG. 2 is a flowchart illustrating the operation example of the information processing apparatus 1 according to the embodiment.

As illustrated in FIG. 2, operations of the information processing apparatus 1 include an operation at the time of learning (S1) for generating a model for measure improvement and operations at the time of prediction (S2 to S9) for obtaining a prediction result by applying the generated model to the input data 22 as a prediction target.

Specifically, when the processing is started, the control unit 10 calculates a weight of the score function described above by using the training data 21 to construct a model for measure improvement (S1).

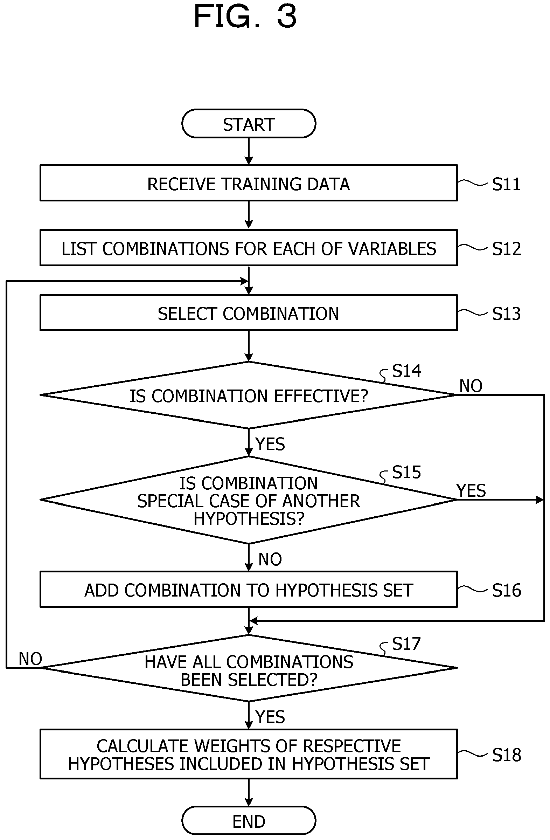

FIG. 3 is a flowchart illustrating an example of the processing of the model construction. As illustrated in FIG. 3, when the processing of the model construction (S1) is started, the input unit 11 receives input of the training data 21 (S11) and stores the training data 21 in the storage unit 20.

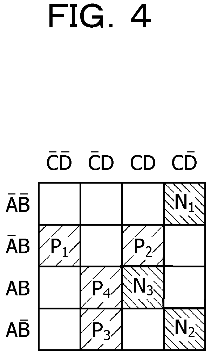

FIG. 4 is an explanatory diagram illustrating an example of the training data 21. The training data 21 is supervised data for each of a plurality of cases, and includes explanatory variables A to D that describe properties of the data and an objective variable that is a classification result (correct answer information) into + or

As illustrated in FIG. 4, training data (P₁ to P₄ and N₁ to N₃) includes explanatory variables A to D (information used for prediction) which describe properties of the data, and objective variables (information desired to be predicted) which are the correct answer information indicating a class (classification) into + or -. For example, the training data P₁ to P₄ are data in which the objective variables A to D each are 0 or 1, and are classified into +. Similarly, the training data N₁ to N₃ are data in which the objective variables A to D each are 0 or 1, and are classified into -.

For example, in the field of the manufacturing process or the like, in the case of the training data (P₁ to P₄ and N₁ to N₃) for generating a prediction model that classifies results (non-defective product/defective product) of manufactured products from process data, the explanatory variables A to D correspond to observation values, control values, and the like for each process. Furthermore, the objective variables correspond to manufacturing results such as a non-defective product/defective product.

Note that the explanatory variable (1/0) is expressed by presence or absence of an overline (hereinafter, referred to as "bar"). For example, A indicates A = 1, and A bar indicates A = 0. Furthermore, the objective variable (+/-) is expressed by a shaded pattern. For example, a shaded pattern of the training data P₁ to P₄ and the like indicates that the objective variable is +. Furthermore, a shaded pattern of the training data N₁ to N₃ and the like indicates that the objective variable is -. Note that it is assumed that these expressions are common also to other drawings.

Next, the hypothesis generation unit 12 comprehensively lists combinations of possible values (unused = *, value = 1, value = 0) for each of the explanatory variables included in the training data (P₁ to P₄ and N₁ to N₃), in other words, hypotheses (S12).

Note that the number of explanatory variables to be combined may be limited (conditioned) to be a predetermined number or less. For example, in the case of four explanatory variables A to D, the number of explanatory variables to be combined may be limited to two or less (at least two of the four explanatory variables that are "unused = *" are combined). With this configuration, it is possible to suppress increase in the number of combinations in advance.

Next, the hypothesis generation unit 12 selects a predetermined combination from the combinations listed in S12 (S13). Next, the hypothesis generation unit 12 classifies the selected combination as any of the training data (P₁ to P₄ and N₁ to N₃) and determines whether or not the selected combination is an effective combination that satisfies a specific condition, based on the explanatory variables and the objective variables of the training data (P₁ to P₄ and N₁ to N₃) (S14).

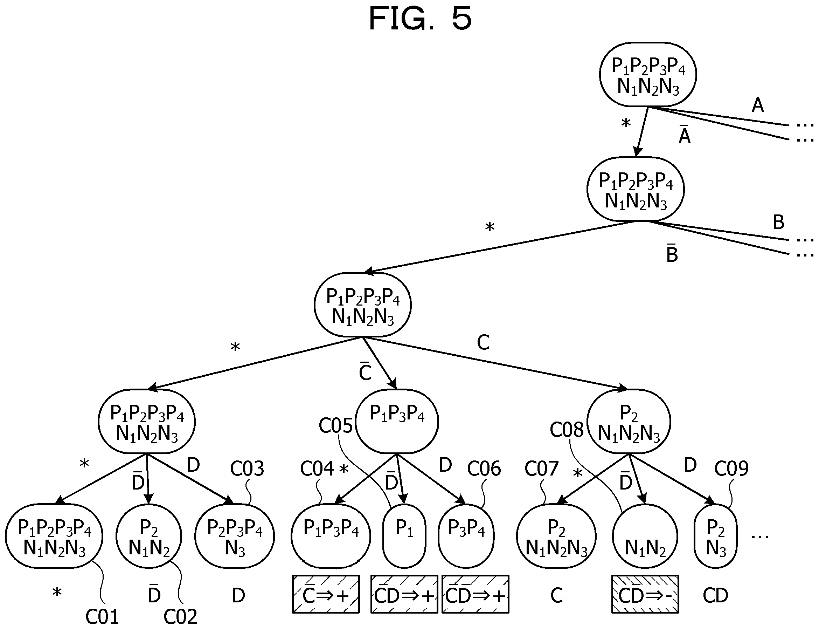

FIG. 5 is an explanatory diagram for describing generation of a hypothesis. FIG. 5 illustrates, as an example, a combination C01 in which all of the four explanatory variables A to D are "*" to a combination C09 which is CD (AB is "*") are indicated.

As illustrated in FIG. 5, the hypothesis generation unit 12 lists the training data (P₁ to P₄ and N₁ to N₃) corresponding to respective hypotheses (rules) of the combinations C01 to C09 based on the explanatory variables of the training data (P₁ to P₄ and N₁ to N₃).

For example, the training data P₂, N₁, and N₂ correspond to the rule of D bar (the remaining three explanatory variables are "unused = *") of the combination C02. In this rule (D bar) of the combination C02, the training data (P₂) in which the objective variable is + and the training data (N₁ and N₂) in which the objective variable is - are mixed. Therefore, the combination C02 is unlikely to be a hypothesis that correctly describes classification into a certain class, and may not be said to be an effective combination.

Here, the training data (P₁, P₃, and P₄) in which the objective variable is + correspond to the rule (C bar) of the combination C04. In other words, in the combination C04, the number or ratio of the pieces of the training data (P₁, P₃, and P₄) classified into the + class is the predetermined value or more, and the combination C04 is highly likely to be a rule that correctly describes classification into the + class. Therefore, the hypothesis generation unit 12 determines that the combination C04 (C bar) is an effective combination (hypothesis) classified into the + class. Similarly, the hypothesis generation unit 12 also determines that the combinations C05 and C06 are the effective combinations (hypotheses) classified into the + class.

Furthermore, the training data (N₁ and N₂) in which the objective variable is - correspond to the rule (CD bar) of the combination C08. In other words, in the combination C08, the number or ratio of the pieces of the training data (N₁ and N₂) classified into the - class is the predetermined value or more, and the combination C08 is highly likely to be a rule that correctly describes classification into the - class. Therefore, the hypothesis generation unit 12 determines that the combination C08 (CD bar) is an effective combination (hypothesis) classified into the - class.

The number or ratio of the pieces of the training data (P₁ to P₄ and N₁ to N₃) classified into a predetermined class, which is a condition for determining an effective combination, may be set optionally. For example, since noise may be mixed in the training data, the setting may be made to allow a predetermined number of classes (for example, -) opposite to the predetermined class (for example, +).

As an example, in a case where noise corresponding to one piece of the training data is allowed, the combination C03 (D) is determined to be an effective combination (hypothesis) classified into the + class. Similarly, the combination C07 (C) is determined to be an effective combination (hypothesis) classified into the - class.

Referring back to FIG. 3, in a case where the combination is not effective (S14: No), the hypothesis generation unit 12 advances the processing to S17 without adding the selected combination to a hypothesis set.

In a case where the combination is effective (S14: Yes), the hypothesis generation unit 12 determines whether or not the selected combination is a special case of another hypothesis included in the hypothesis set (S15).

For example, C bar D of the combination C05 and C bar D bar of the combination C06 in FIG. 5 are formed by adding a new literal to the C bar of the combination C04. The hypothesis generation unit 12 determines that such combinations C05 and C06 are special cases of the C bar of the combination C04.

In the case of the special case (S15: Yes), the hypothesis generation unit 12 advances the processing to S17 without adding the selected combination to the hypothesis set.

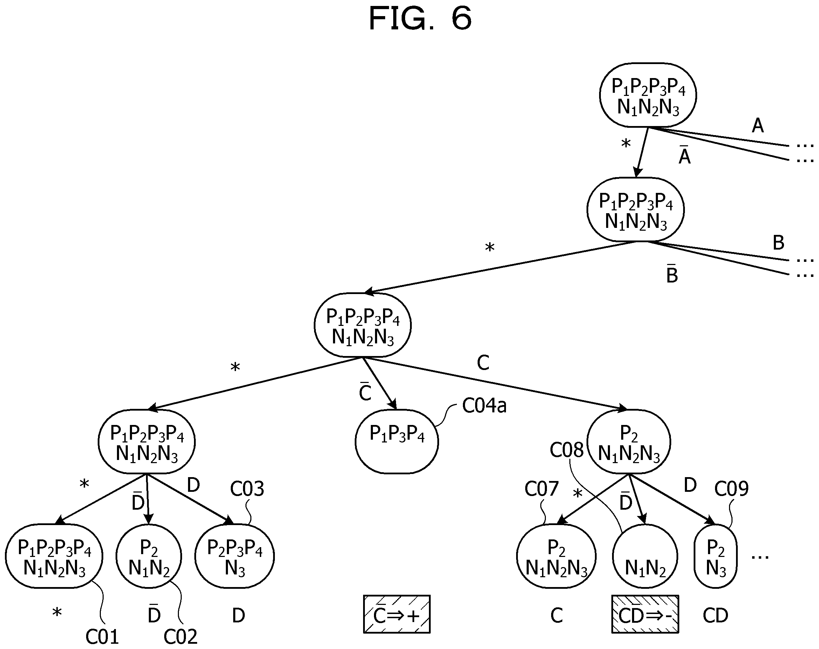

FIG. 6 is an explanatory diagram for describing the generation of the hypothesis. As illustrated in FIG. 6, the hypothesis generation unit 12 omits the combinations (combinations C05 and C06) that are the special cases of C bar, and leaves a combination C04a of C bar as the hypothesis set.

In the case of not the special case (S15: No), the hypothesis generation unit 12 adds the selected combination to the hypothesis set of the hypothesis set data 23 (S16). Next, the hypothesis generation unit 12 determines whether or not all the combinations listed in S12 have been selected (S17). In a case where there is an unselected combination (S17: No), the hypothesis generation unit 12 returns the processing to S13.

By repeating the processing of S13 to S17, the hypothesis generation unit 12 lists, in the hypothesis set, the hypotheses that may correctly describe that prediction is made based on the objective variables of the training data 21, without omission.

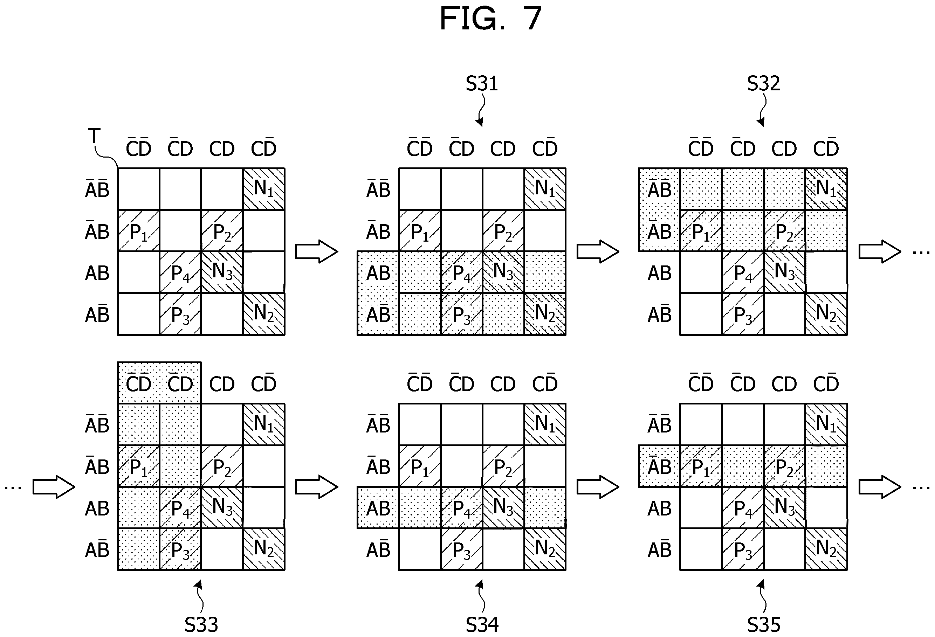

FIG. 7 is an explanatory diagram for describing the generation of the hypothesis, and specifically, a diagram for describing the contents of FIGs. 5 and 6 using a Carnot diagram example.

As illustrated in FIG. 7, the hypothesis generation unit 12 changes combinations in order of a combination of A (the remaining three explanatory variables are "unused = *") (S31), a combination of A bar (the remaining three explanatory variables is "unused = *") (S32) ..., and examines an effective combination (S31 to S35 ...).

Here, the combination of (C bar) in S33 corresponds to the training data (P₁, P₃, and P₄) in which the objective variable is +. In other words, in S33, the number or ratio of the pieces of the training data (P₁, P₃, and P₄) classified into the + class is the predetermined value or more. Therefore, the combination of (C bar) in S33 is determined to be an effective combination (hypothesis) classified into the + class. Note that, in the following processing, a combination in which a literal is added to the (C bar) is excluded.

Next, the hypothesis generation unit 12 starts examining a combination in which two explanatory variables are "unused = *" after examining all combinations in which three explanatory variables are "unused = *" (S34). Here, the combination of (A bar B) in S35 corresponds to the training data (P₁ and P₂) in which the objective variable is +. In other words, in S35, the number or ratio of the pieces of the training data (P₁ and P₂) classified into the + class is the predetermined value or more. Therefore, the combination of (A bar B) in S35 is determined to be an effective combination (hypothesis) classified into the + class.

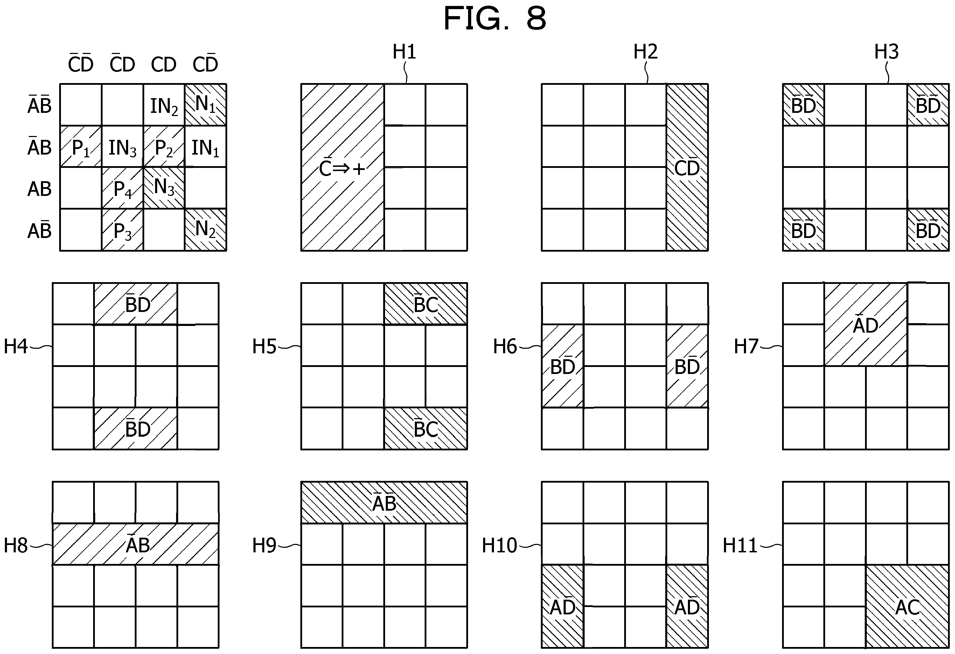

FIG. 8 is an explanatory diagram illustrating an example of the generated hypothesis. As illustrated in FIG. 8, from the training data (P₁ to P₄ and N₁ to N₃), hypotheses H1 to H11 in which the classification result is + or - are generated and stored in the storage unit 20 as the hypothesis set data 23.

Each of the hypotheses H1 to H11 is an independent hypothesis based on a requirement that the fact that the classification result of the training data (P₁ to P₄ and N₁ to N₃) is + or - is correctly described. Therefore, mutually inconsistent hypotheses such as the hypothesis H2 and the hypothesis H6 may be included.

Furthermore, for input data (IN₁, IN₂, and IN₃) not included in the training data (P₁ to P₄ and N₁ to N₃), prediction results may be obtained from matching hypotheses among the hypotheses H1 to H11.

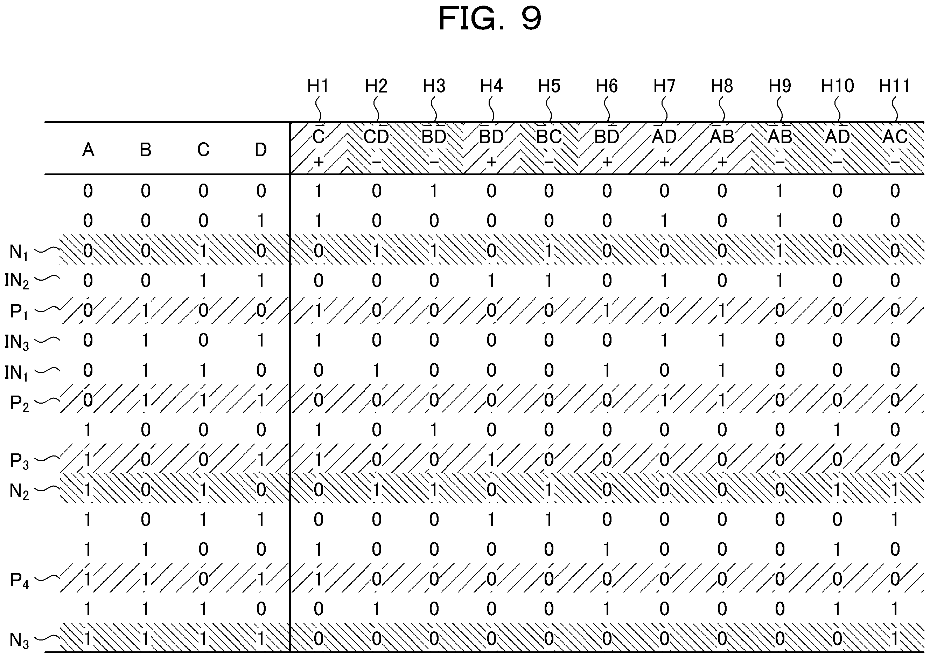

FIG. 9 is an explanatory diagram for describing hypotheses that match the input data (IN₁, IN₂, and IN₃). As illustrated in FIG. 9, for the input data IN₁, CD bar ⇒ - of the hypothesis H2, BD bar ⇒ + of the hypothesis H6, and A bar B ⇒ + of the hypothesis H8 are matching hypotheses. Furthermore, for the input data IN₂, B bar D ⇒ + of the hypothesis H4, B bar C ⇒ - of the hypothesis H5, A bar D ⇒ + of the hypothesis H7, and A bar B bar ⇒ - of the hypothesis H9 are matching hypotheses. Furthermore, for the input data IN₃, C bar ⇒ + of the hypothesis H1, A bar D ⇒ + of the hypothesis H7, and A bar B ⇒ + of the hypothesis H8 are matching hypotheses.

Referring back to FIG. 3, in a case where there is no unselected combination (S17: Yes), the learning unit 13 calculates weights of the respective hypotheses (H1 to H11) based on whether or not each of the hypothesis (H1 to H11) included in the hypothesis set of the hypothesis set data 23 is established for each piece of the training data (P₁ to P₄ and N₁ to N₃) (S18). Next, the learning unit 13 stores, as the weight data 24, a calculation result in the storage unit 20.

The weight calculation in the learning unit 13 may be any of the following three methods, for example.
- All the rules (H1 to H11) are set to weight 1 (majority decision based on the number of rules).
- The weights are set based on the number of pieces of training data (P₁ to P₄ and N₁ to N₃) that support (correspond to) the rules (H1 to H11).
- Weighting by logistic regression to which the training data (P₁ to P₄ and N₁ to N₃) is applied is performed.

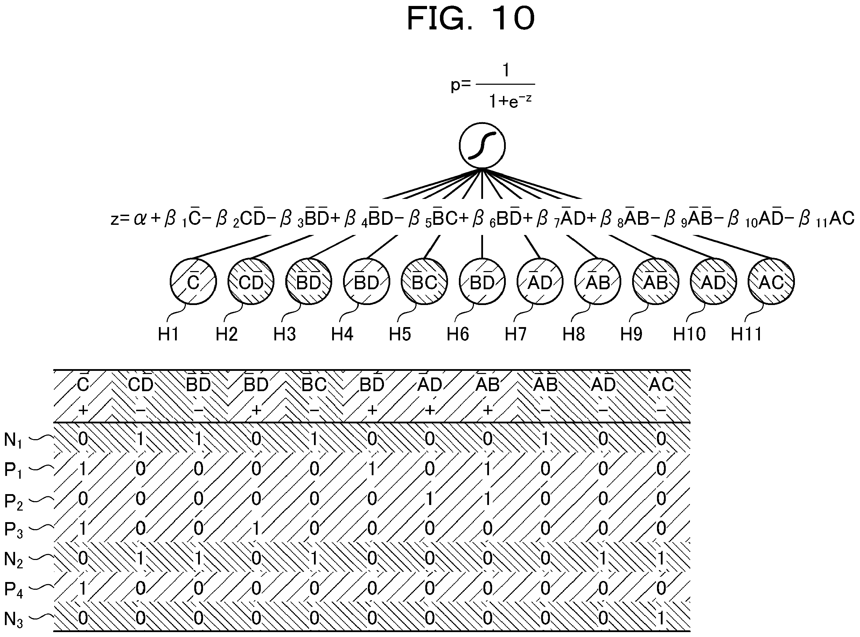

FIG. 10 is an explanatory diagram for describing the weighting by the logistic regression. In the logistic regression, as illustrated in FIG. 10, the training data (P₁ to P₄ and N₁ to N₃) are applied to a model expression to obtain weights (β1 to β11) related to the hypotheses H1 to H11. This model expression corresponds to a score function for obtaining a prediction score, and is expressed by a pseudo-Boolean function.

Here, the learning unit 13 may select a hypothesis according to the weights of the respective hypotheses (H1 to H11) obtained by the logistic regression or the like.

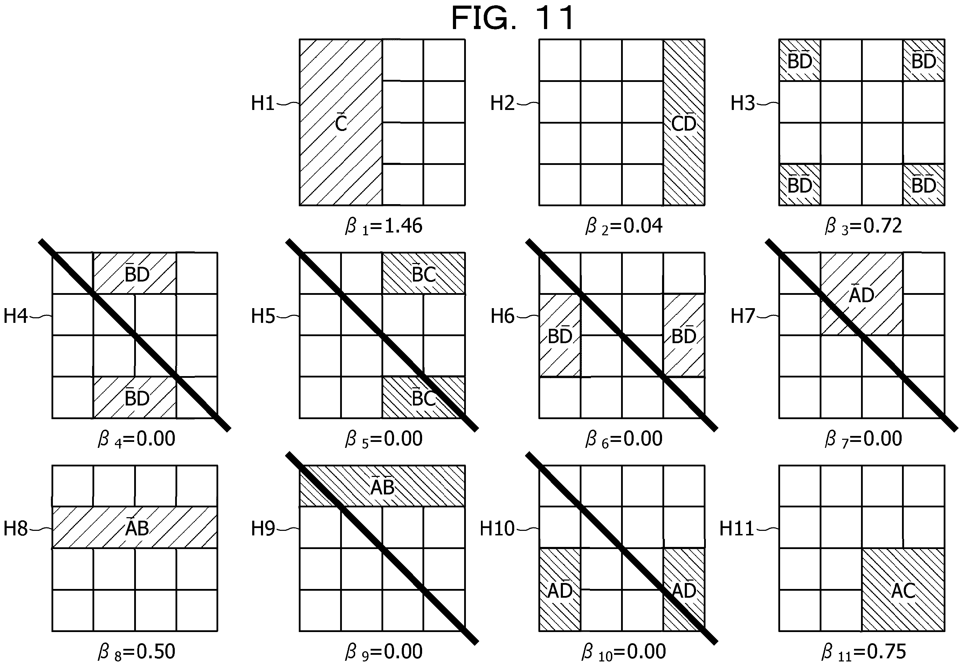

FIG. 11 is an explanatory diagram for describing the selection of the hypothesis. As illustrated in FIG. 11, the learning unit 13 selects a major hypothesis that has a weight of a predetermined value or more and has a large influence on the prediction result, based on the weights (β1 to β11) of the hypotheses H1 to H11. In the illustrated example, the five hypotheses H1 to H3, H8, and H11 of C bar, CD bar, B bar D bar, A bar B, and AC, having weights that are not zero, have been selected as the major hypotheses.

Referring back to FIG. 2, the operations at the time of prediction (S2 to S9) will be described. When the operations at the time of prediction are started, the input unit 11 receives current feature amounts (input data 22) of the prediction target and stores the current feature amounts in the storage unit 20 (S2). Next, the prediction unit 14 executes prediction processing based on the input data 22 by using the fact that a score function of the prediction model by the hypothesis set according to the hypothesis set data 23 and the weights of the respective hypotheses according to the weight data 24 is a pseudo-Boolean function. The prediction unit 14 stores the performance data 25 indicating a prediction result of the prediction processing in the storage unit 20.

Specifically, the prediction unit 14 collects, from the input data 22, observation values (known actions) that have been known in explanatory variables of the prediction target. Next, the prediction unit 14 substitutes current values of uncontrollable variables into the score function of the prediction model for obtaining a score of a target label in the input data 22 (S3). Specifically, the prediction unit 14 substitutes values (current values) of the observation values that have been known among the explanatory variables of the prediction target into the score function.

Next, the prediction unit 14 decides value assignment for the remaining variables (unknown variables among the explanatory variables) so as to optimize the prediction score in the score function (S4). Specifically, for the remaining respective variables, the prediction unit 14 decides assignment of the variables by using a findMax function for searching for assignment (combination) of variable values that maximizes the prediction score.

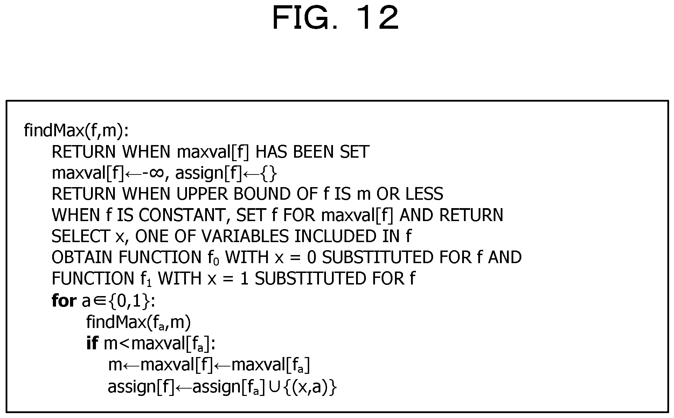

FIG. 12 is an explanatory diagram exemplifying an algorithm of the findMax function. The prediction unit 14 searches for the assignment of the remaining respective variables that maximizes the prediction score by executing findMax (score function, -∞) by using the findMax function having the algorithm as illustrated in FIG. 12.

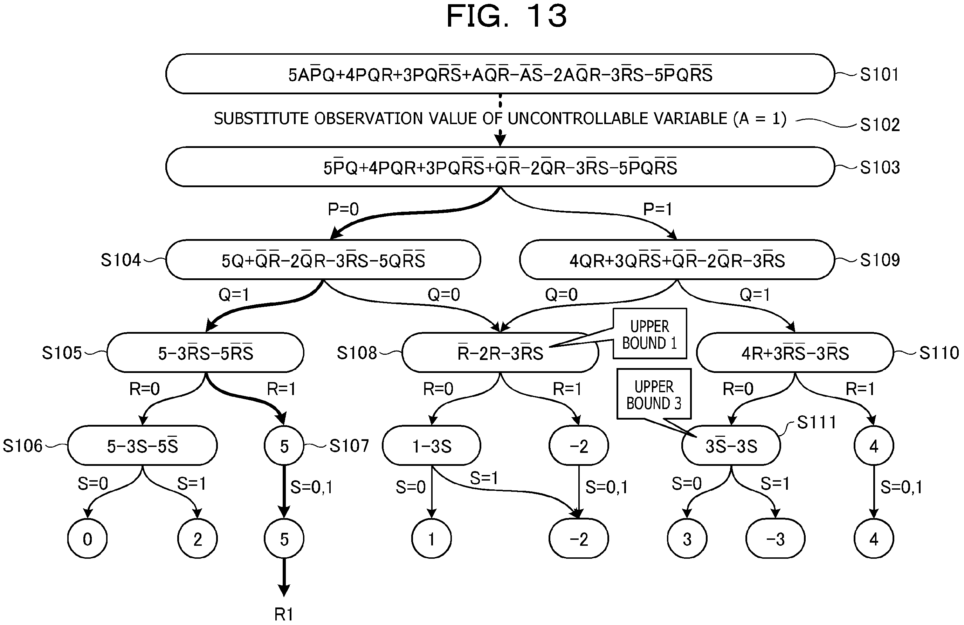

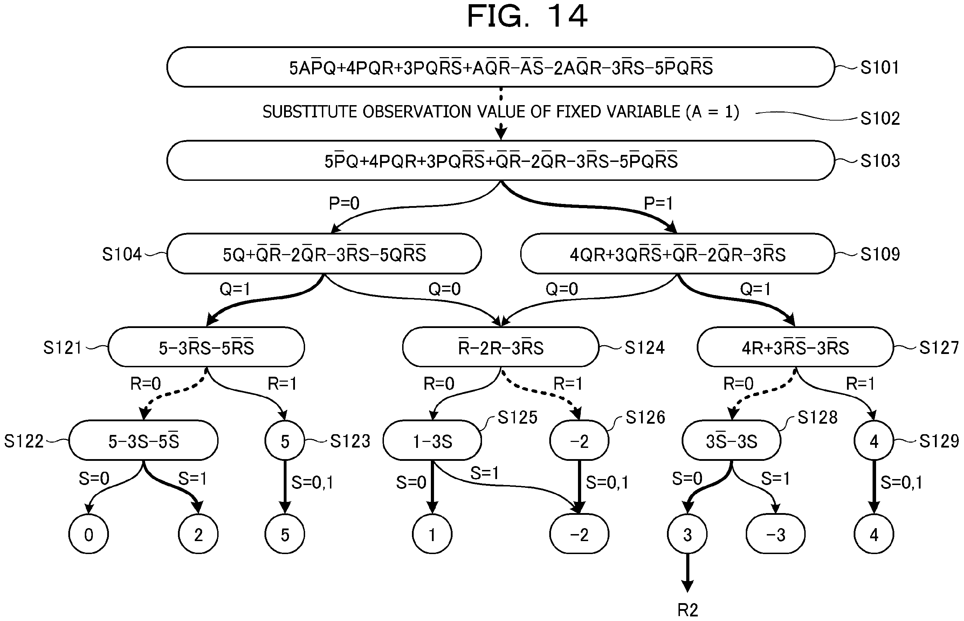

FIGs. 13 and 14 are explanatory diagrams for describing an example of the variable value assignment. Note that, in FIG. 13, it is assumed that, among variables A, P, Q, R, and S, the variable A is an observation value that has been known, and the variables P, Q, R, and S are unknown. In FIG. 14, it is assumed that the variables P, Q, R, and S are unknown, and the variable R is a variable corresponding to items that are not controlled.

For the unknown explanatory variables (P, Q, R, and S), it is assumed that order corresponding to process order or the like in a manufacturing process (for example, P → Q → R → S) and items that are controlled (controllable) or items that are not controlled (uncontrollable) are set beforehand in the input data 22. Note that the items that are not controlled may be, for example, a control value set by a human in the manufacturing process, and the like. Furthermore, the items that are not controlled may be an observation value that has been observed as a state of the process, and the like.

As illustrated in FIG. 13, it is assumed that a score function according to the variables A, P, Q, R, and S and weights of the respective variables is as indicated in S101. Here, since the variable A is the observation value that has been known (A = 1), the prediction unit 14 substitutes the observation value of the uncontrollable variable A into the score function (S102). With this configuration, the score function becomes as indicated in S103.

Next, the prediction unit 14 sets the variables according to the setting order (P → Q → R → S) and decides assignment of variable values to maximize the prediction score.

For example, by substituting P = 0 into the score function, the prediction unit 14 obtains a score function related to a state where A = 1 and P = 0 (S104). Next, by substituting Q = 1 into the score function, the prediction unit 14 obtains a score function related to a state where A = 1, P = 0, and Q = 1 (S105).

Next, by substituting R = 1 into the score function, the prediction unit 14 obtains a score function related to a state where A = 1, P = 0, Q = 1, and R =1 (S106). Here, in a case where S = 0, the prediction score is found to be 0, and in a case where S = 1, the prediction score is found to be 2.

The prediction unit 14 returns to S105, and by substituting R = 0 into the score function, the prediction unit 14 finds that the prediction score is 5 for a state where A = 1, P = 0, Q = 1, and R = 0 (S107). With this configuration, in the state where A = 1, P = 0, and Q = 1, regardless of the value of S, the prediction score is found to be the largest in the state where R = 0.

Next, the prediction unit 14 returns to S104, and by substituting Q = 0 into the score function, the prediction unit 14 obtains a score function related to a state where A = 1, P = 0, and Q = 0 (S108). Here, the prediction unit 14 finds that an upper bound is 1 from a positive term of the score function. Therefore, for the state where A = 1, P = 0, and Q = 0, without searching for states of R and S, the score function is found to be lower than that in the state where A = 1, P = 0, and Q = 1.

Next, the prediction unit 14 returns to S103, and by substituting P = 1 into the score function, the prediction unit 14 obtains a score function related to a state where A = 1 and P = 1 (S109). Next, by substituting Q = 0 into the score function, the prediction unit 14 obtains a score function related to a state where A = 1, P = 1, and Q = 0. Since this score function is the same as that in S108, for the state where A = 1, P = 1, and Q = 0, without searching for states of R and S, the score function is found to be lower than that in the state where A = 1, P = 0, and Q = 1.

Next, the prediction unit 14 returns to S109, and by substituting Q = 1 into the score function, the prediction unit 14 obtains a score function related to a state where A = 1, P = 1, and Q = 1 (S110).

Next, by substituting R = 0 into the score function, the prediction unit 14 obtains a score function related to a state where A = 1, P = 1, Q = 1, and R = 0 (S111). Here, the prediction unit 14 finds that an upper bound is 3 from a positive term of the score function. Therefore, for the state where A = 1, P = 1, Q = 1, and R = 0, without searching for a state of S, the score function is found to be lower than that in the state where A = 1, P = 0, and Q = 1.

Next, the prediction unit 14 returns to S110, and by substituting R = 1 into the score function, the prediction unit 14 finds that the prediction score is 4 for the state where A = 1, P = 1, Q = 1, and R = 1.

By performing the processing described above, the prediction unit 14 finds that the prediction score is the largest by a combination R1 of the variables in the state where A = 1, P = 0, Q = 1, and R = 0 (S is optional).

Note that, for variables corresponding to items that are not controlled, the prediction unit 14 may decide values estimated to decrease the prediction score. With this configuration, prediction of other variables may be performed assuming the worst case for the items that are not controlled.

Specifically, as illustrated in FIG. 14, after obtaining the score function related to the state where A = 1, P = 0, and Q = 1 (S121), the prediction unit 14 sets values of the variable R (item that is not controlled) subsequent to the variable Q to obtain prediction scores (S122 and S123).

Here, the prediction unit 14 sets a value estimated to decrease the prediction score as the value of the variable R. For example, in a case where R = 1, the prediction score is 0 or 2 when S = 1, and in a case where R = 0, the prediction score is 5 regardless of S. Therefore, the variable R is set to R = 0 that is estimated to decrease the prediction score. Note that, since a value that maximizes the prediction score is set for the variable S, S = 1.

Similarly, after obtaining the score function related to the state where A = 1, P = 0, and Q = 0 (S124), the prediction unit 14 sets values of the variable R (item that is not controlled) subsequent to the variable Q to obtain prediction scores (S125 and S126). Furthermore, after obtaining the score function related to the state where A = 1, P = 1, and Q = 1 (S127), the prediction unit 14 sets values of the variable R (item that is not controlled) subsequent to the variable Q to obtain prediction scores (S128 and S129).

In this way, the prediction unit 14 searches for assignment of each of the variables by deciding a value estimated to decrease the prediction score for the variable R, and then maximizing the prediction score for other variables. With this configuration, the prediction unit 14 obtains a combination R2 of the variables in a state where A = 1, P =1, Q = 1, R = 0, and S = 0.

Note that the prediction unit 14 may decide the variables corresponding to the items that are not controlled, so as to increase an expected value of the prediction score. Specifically, the prediction unit 14 fixes a weight of a product term including an unknown and uncontrollable variable to 0, and recalculates weighting of the score function. Next, the prediction unit 14 selects a value of an unknown and controllable variable (for example, the variable P, Q, or S) so as to maximize a new score function. Next, the prediction unit 14 sequentially executes actions as long as the next variable is a controllable variable (for example, the variable P or Q). Furthermore, as long as the next variable is an uncontrollable variable, the prediction unit 14 waits for a value of the variable to be fixed. Hereinafter, the prediction unit 14 searches for a combination of variables by repeating the processing described above.

In this way, the prediction unit 14 lists the optimum explanatory variable values (combinations of feature amounts) that serve as the target label. Next, the prediction unit 14 takes a difference between a set of variable values (combination of feature amounts) at the time of score optimization and a current set of variable values in the input data 22 of an evaluation target (S5).

Next, for the feature amounts related to the difference in the processing (S5) described above, the determination unit 15 counts an occurrence frequency of changes in each feature amount on time-series data in the performance data 25 (S6). Note that the determination unit 15 obtains the occurrence frequency for each feature amount related to the difference. With this configuration, the determination unit 15 obtains an occurrence frequency of a case (changes in each feature amount) corresponding to the difference in past performances.

Next, for each feature amount related to the difference, the determination unit 15 determines whether or not all the occurrence frequencies of changes in the respective feature amounts satisfy a predetermined frequency condition (for example, the occurrence frequency is a predetermined threshold or more) (S7).

In a case where there is a feature amount that does not satisfy the frequency condition (S7: No), the prediction unit 14 sets a variable related to the feature amount that does not satisfy the frequency condition to "uncontrollable" (S8), and returns the processing to S3. With this configuration, the prediction unit 14 re-lists the optimum explanatory variable values (combinations of feature amounts) that serve as the target label to re-create the policy.

In a case where there is no feature amount that does not satisfy the frequency condition (S7: Yes), the prediction unit 14 considers that the policy corresponding to the difference created in S5 is sufficiently feasible from the past performances, outputs the difference created in S5 as an improvement measure (S9), and ends the processing. Specifically, the prediction unit 14 adds the occurrence frequencies obtained in S6 as frequency information of the changes in the feature amounts, and then stores the result data 26 indicating the improvement measure (policy) in the storage unit 20.

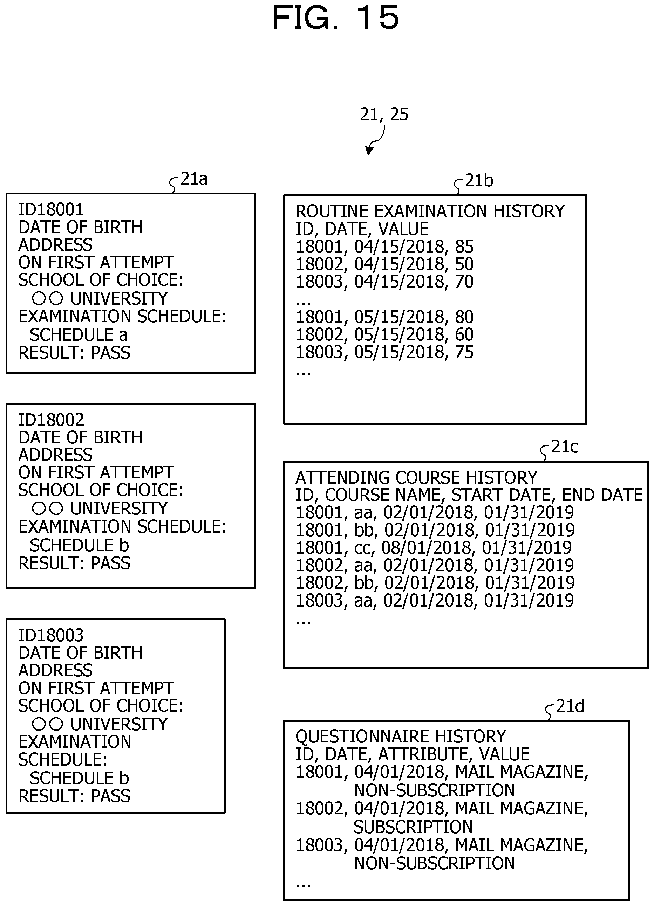

Here, a specific example of the operation described above will be described. First, as a first specific example, a case of predicting what action needs to be performed next for a student to achieve a target (pass a test) will be described with reference to FIGs. 15 to 22.

FIG. 15 is an explanatory diagram for describing a specific example of the training data 21 and the performance data 25. As illustrated in FIG. 15, the training data 21 is supervised data including a pass/fail result, which is a classification result (correct answer information), for each case of a past student. Specifically, the training data 21 includes, for each student, a profile 21a including a pass/fail result, a routine examination history 21b indicating a performance in a routine examination, an attending course history 21c indicating a performance in an attending course, and a questionnaire history 21d indicating answer contents of a questionnaire.

Note that the performance data 25 may be anything as long as the performance data 25 indicates past performances of each student, and similarly to the training data 21, for example, the performance data 25 includes the profile 21a, the routine examination history 21b, the attending course history 21c, and the questionnaire history 21d. Furthermore, the performance data 25 may be substituted by the training data 21.

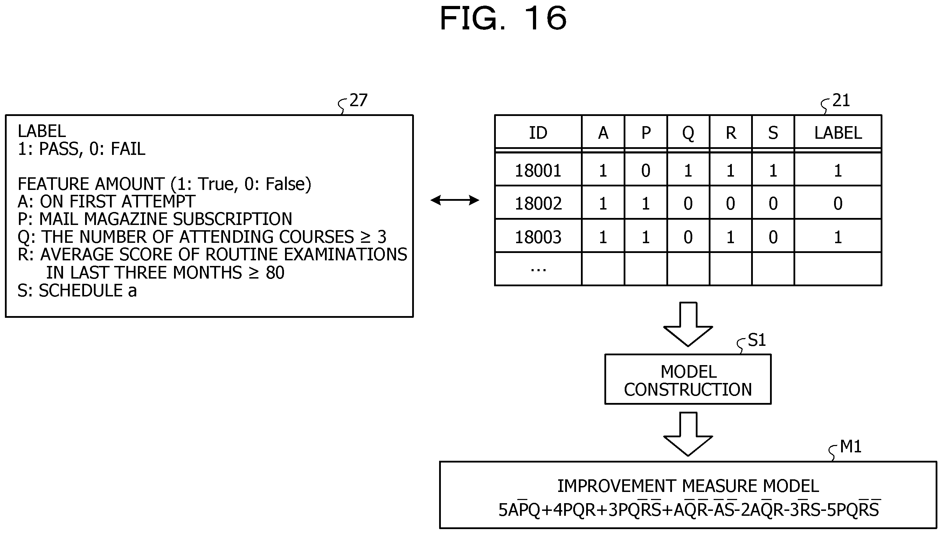

FIG. 16 is an explanatory diagram for describing a specific example of the model construction. As illustrated in FIG. 16, the input unit 11 converts a data format of the training data 21 according to an input format of the model based on a data definition 27 that defines conversion of a variable (feature amount). Specifically, for feature amounts such as A: on a first attempt, P: mail magazine subscription, Q: the number of attending courses ≥ 3, R: an average score of routine examinations in the last three months ≥ 80, and S: schedule a (examination schedule), conversion is performed to 1: True and 2: False. Next, based on the training data 21, the control unit 10 constructs a model M1 related to an improvement measure by the processing of the model construction (S1) described above.

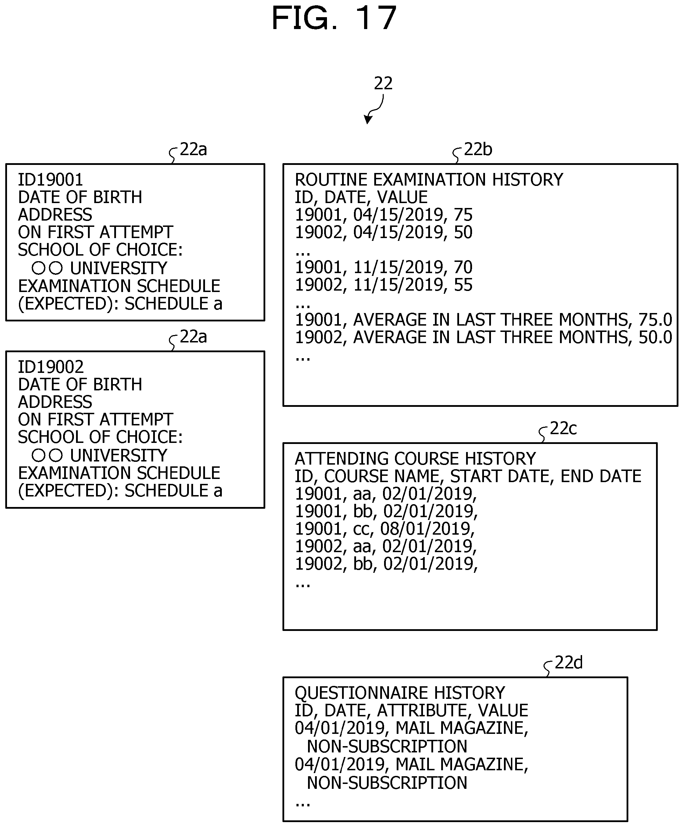

FIG. 17 is an explanatory diagram for describing a specific example of the input data 22. As illustrated in FIG. 17, the input data 22 is data indicating a current situation (feature amount) of each of students (19001, 19002, ...) as prediction targets to whom identification information (ID) is assigned. Specifically, the input data 22 includes a profile 22a, a routine examination history 22b, an attending course history 22c, and a questionnaire history 22d.

Based on the data definition 27, the input unit 11 converts a value of the input data 22 in accordance with an input format of the model M1. Next, the prediction unit 14 performs prediction by applying the converted data to the model M1.

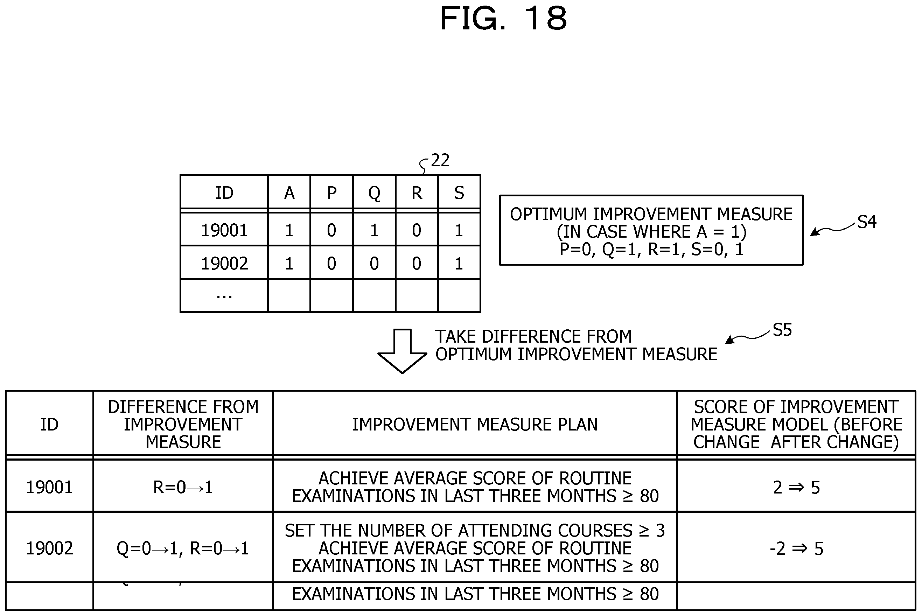

FIG. 18 is an explanatory diagram for describing a specific example of the improvement measure plan. As illustrated in FIG. 18, the prediction unit 14 substitutes a current value of an uncontrollable variable (for example, A = 1) for each of the students (19001, 19002, ...), and then optimizes the prediction score in the score function, to decide remaining variable value assignment (S4). For example, for the student (19001), P = 0, Q = 1, R = 1, and S = 0, which is an optimum combination of feature amounts (optimum improvement measure plan) in a case where A = 1, is obtained.

Next, the prediction unit 14 takes a difference between the optimum improvement measure plan and current values of the variables for the student, and obtains an improvement measure plan for proposing as the policy and a score obtained from the score function (before change ⇒ after change) (S5).

For example, for the student (19001), the difference between the optimum improvement measure (P = 0, Q = 1, R = 1, and S = 0) and the current values is R = 0 → 1. This R = 0 → 1 corresponds to "achieve an average score of routine examinations in the last three months ≥ 80" according to the data definition 27. Therefore, the prediction unit 14 creates the "achieve an average score of routine examinations in the last three months ≥ 80" according to the difference as the improvement measure plan for the student (19001).

Similarly, for the student (19002), the differences between the optimum improvement measure plan (P = 0, Q = 1, R = 1, and S = 0) and the current values are Q = 0 → 1 and R = 0 → 1. These Q = 0 → 1 and R = 0 → 1 correspond to "set the number of attending courses ≥ 3" and "achieve an average score of routine examinations in the last three months ≥ 80" according to the data definition 27. Therefore, the prediction unit 14 creates the "set the number of attending courses ≥ 3" and the "achieve an average score of routine examinations in the last three months ≥ 80" according to the difference as the improvement measure plan for the student (19002).

It is unclear whether or not the improvement measure plan created here is difficult for each student to implement. Thus, the determination unit 15 determines appropriateness of the improvement measure plan created by the prediction unit 14 based on the performance data 25 indicating the past performances.

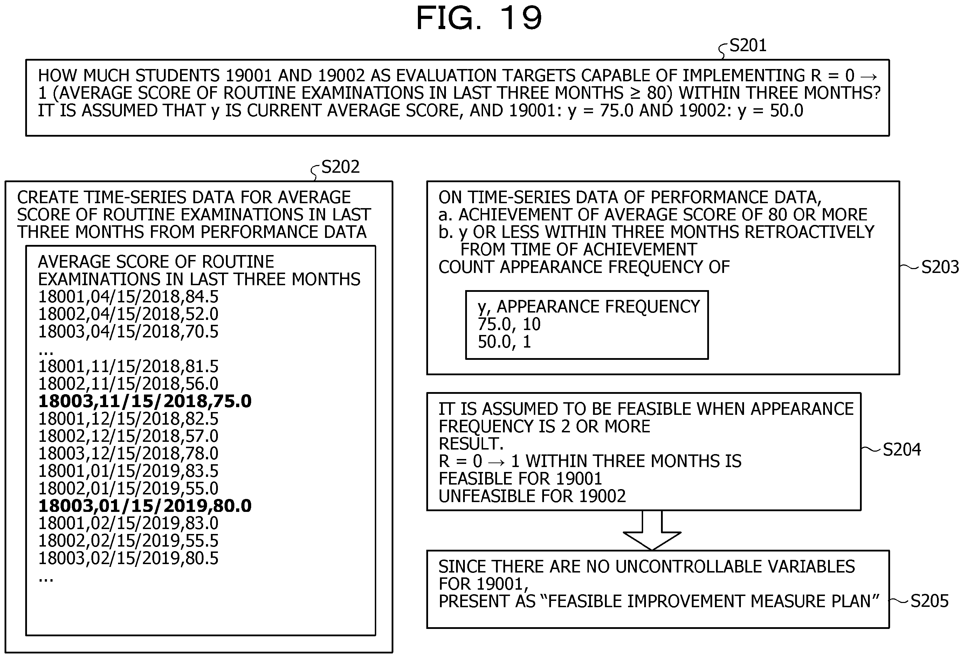

FIG. 19 is an explanatory diagram for describing a specific example of a feasible improvement measure plan. As illustrated in FIG. 19, the determination unit 15 determines appropriateness of the improvement measure plan by determining how much the students (19001 and 19002) as the evaluation targets may implement R = 0 → 1 (an average score of routine examinations in the last three months ≥ 80) within three months (S201). Here, it is assumed that y is a current average score, and 19001: y = 75.0 and 19002: y = 50.0.

Next, the determination unit 15 creates time-series data for the average score of the routine examinations in the last three months from the performance data 25 (S202). Next, on the time-series data of the performance data 25, the determination unit 15 counts an appearance frequency of a. achievement of an average score of 80 or more, and b. y or less within three months retroactively from the time of the achievement (S203). Here, it is assumed that the appearance frequency of 10 is obtained in the case where y is 75.0, and the appearance frequency of 1 is obtained in the case where y is 50.0.

Next, the determination unit 15 determines whether or not the obtained appearance frequency satisfies a predetermined condition, and determines appropriateness of the improvement measure plan. For example, in a case where it is assumed to be feasible when the appearance frequency is 2 or more, the determination unit 15 determines 19001 as feasible (improvement measure plan is appropriate), and 19002 as unfeasible (improvement measure plan is inappropriate) (S204).

Here, since there are no uncontrollable variables for the student (19001), the output unit 16 presents the created improvement measure plan as a "feasible improvement measure plan" (S205).

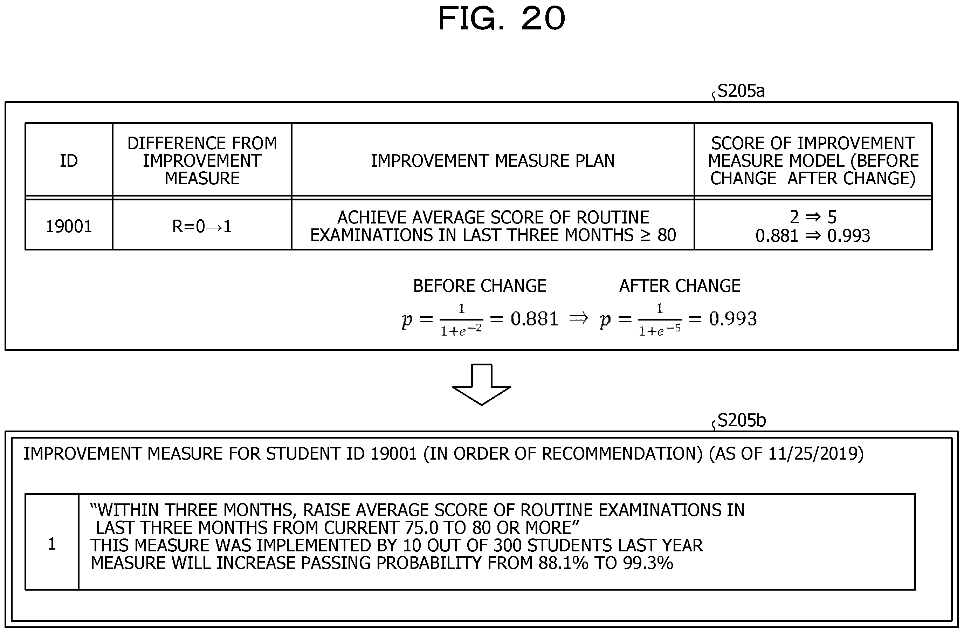

FIG. 20 is an explanatory diagram for describing a presentation example of the improvement measure plan. As illustrated in FIG. 20, the prediction unit 14 stores, in the storage unit 20, the result data 26 including the improvement measure plan determined by the determination unit 15 to be appropriate, the score obtained from the score function (before change ⇒ after change), and a passing probability (probability of achieving the target label (pass)) before and after implementation of the improvement measure plan (S205a). Note that the probability of achieving the target label before and after implementation of the improvement measure plan is calculated at the time of prediction by the prediction unit 14 applying an expression (p = 1/(1 + e^{-z})) of a pass/fail determination model.

Next, the output unit 16 reads the result data 26 from the storage unit 20, and presents, to the student (19001), a proposal including the improvement measure plan of "an average score of routine examinations in the last three months ≥ 80", the number of past performances, and the passing probability before and after implementation of the improvement measure plan, on a display or the like (S205b).

Note that, for the student (19002), since there is a variable whose appearance frequency does not satisfy the predetermined condition, the improvement measure plan is re-created.

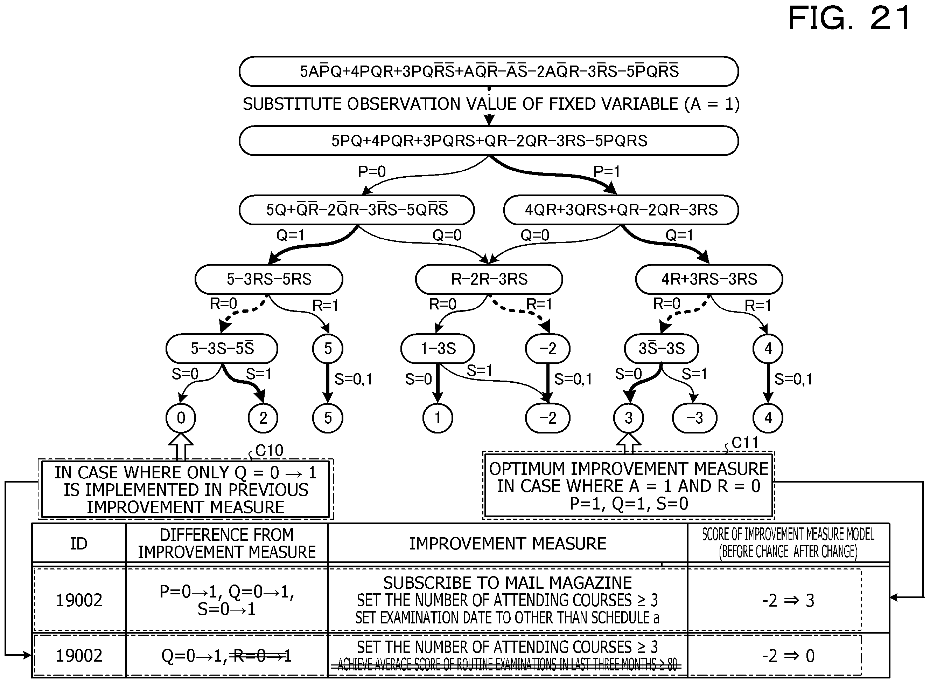

FIG. 21 is an explanatory diagram for describing the re-creation of the improvement measure plan. As illustrated in FIG. 21, for the student (19002), the variable (R) whose appearance frequency does not satisfy the predetermined condition is set as an uncontrollable variable to re-create the improvement measure plan. Specifically, the prediction unit 14 substitutes a current value (0) by setting the variable (R) as an uncontrolled item, and re-creates the improvement measure plan. With this configuration, the prediction unit 14 obtains P = 1, Q = 1, and S = 0 as an optimum improvement measure in a case where A = 1 and R = 0 (C11).

Therefore, for the student (19002), as the differences between the optimum improvement measure plan (P = 1, Q = 1, and S = 0) and the current values, P = 0 → 1, Q = 0 → 1, and S = 0 → 1 are obtained. According to the data definition 27, these differences correspond to "subscribe to a mail magazine", "set the number of attending courses ≥ 3", and "set an examination date to other than schedule a". Therefore, the prediction unit 14 re-creates the "subscribe to a mail magazine", the "set the number of attending courses ≥ 3", and the "set an examination date to other than schedule a" according to the difference as the improvement measure plan for the student (19002).

In the improvement measure plan re-created such as this C11, the score before change ⇒ after change by the score function is improved from -2 to 3. On the other hand, in a case where only Q = 0 → 1 which may be implemented in the previous improvement measure plan in C10 is implemented, the score before change ⇒ after change by the score function is improved only from -2 to 0. Therefore, by re-creating the improvement measure plan as described above, it is possible to present the improvement measure plan closer to the target label (pass).

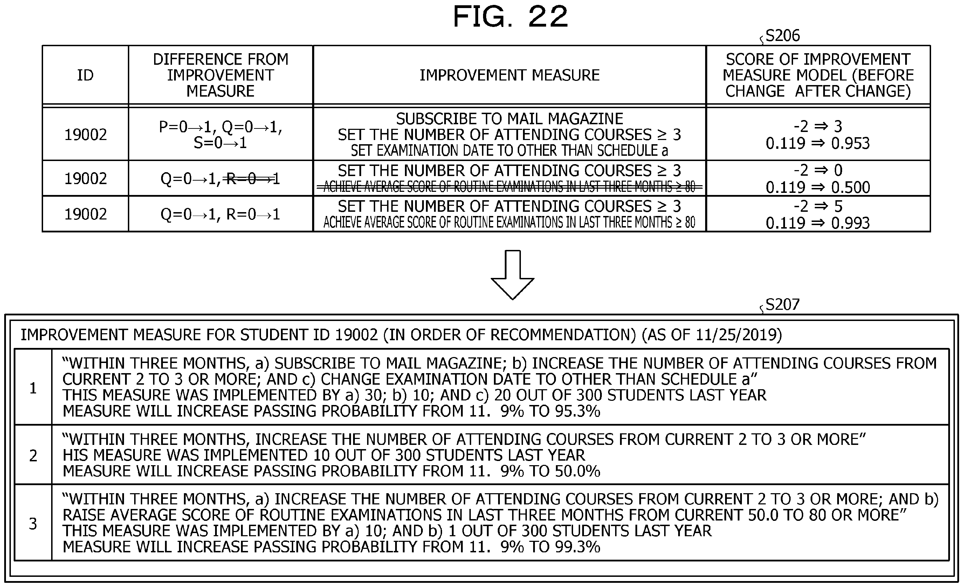

FIG. 22 is an explanatory diagram for describing a presentation example of the improvement measure plan. As illustrated in FIG. 22, the prediction unit 14 stores, in the storage unit 20, the result data 26 including the improvement measure plan re-created for the student (19002), the score obtained from the score function (before change ⇒ after change), and the passing probability (probability of achieving the target label (pass)) before and after implementation of the improvement measure plan (S206).

Next, the output unit 16 reads the result data 26 from the storage unit 20, and presents, to the student (19002), a proposal including the number of past performances and the passing probability before and after implementation of the improvement measure plan for each of the created plurality of improvement measure plans, on a display or the like (S201).

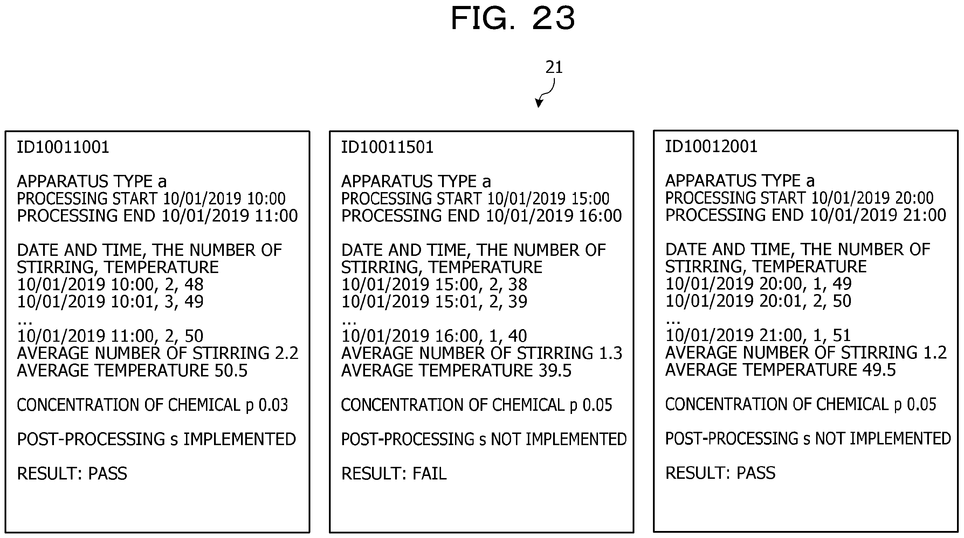

Next, as a second specific example, a case of predicting how to control the next process to manufacture a non-defective product in a manufacturing process will be described with reference to FIGs. 23 to 32.

FIG. 23 is an explanatory diagram for describing a specific example of the training data 21. As illustrated in FIG. 23, the training data 21 is supervised data including a pass/fail result, which is a classification result (correct answer information), for each case of a past manufacturing process.

In the manufacturing process indicated in the specific example, several manufacturing apparatuses of the same type are used, and one manufacturing apparatus manufactures one product. Specifically, processing of immersing the product in a solution in the manufacturing apparatus is implemented for a predetermined period of time, and a chemical (p) is applied at the end of the processing. Furthermore, post-processing (s) may be implemented. Furthermore, in this manufacturing process, the number of stirring and temperature of the solution in the manufacturing apparatus are measured.

The training data 21 includes, for each manufacturing process, a pass/fail result, the number of stirring and temperature, measurement date and time thereof, concentration of the chemical (p), presence or absence of implementation of the post-processing (s), and the like.

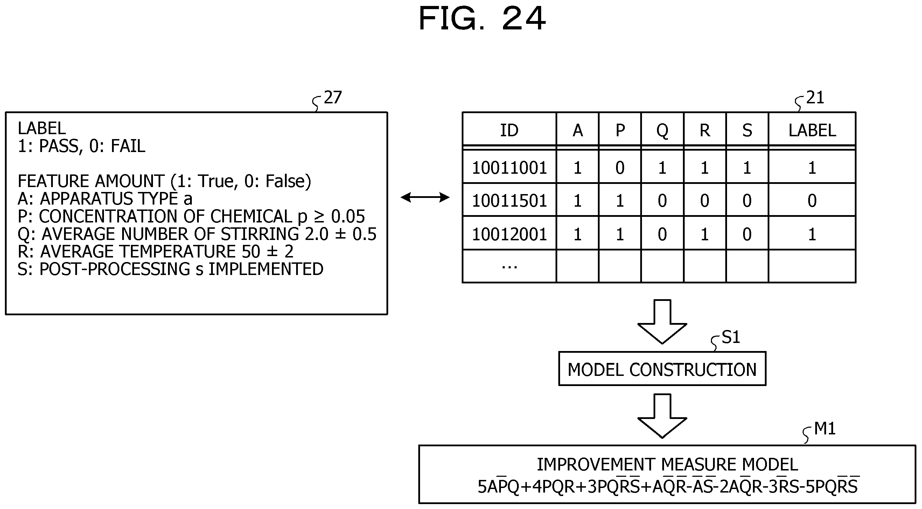

FIG. 24 is an explanatory diagram for describing a specific example of the model construction. As illustrated in FIG. 24, the input unit 11 converts a data format of the training data 21 according to an input format of the model based on the data definition 27 that defines conversion of a variable (feature amount). Specifically, for feature amounts such as A: apparatus type a, P: concentration of the chemical p ≥ 0.05, Q: an average number of stirring 2.0 ± 0.5, R: average temperature 50 ± 2, and S: post-processing s implemented, conversion is performed to 1: True and 2: False. Next, based on the training data 21, the control unit 10 constructs a model M1 related to an improvement measure by the processing of the model construction (S1) described above.

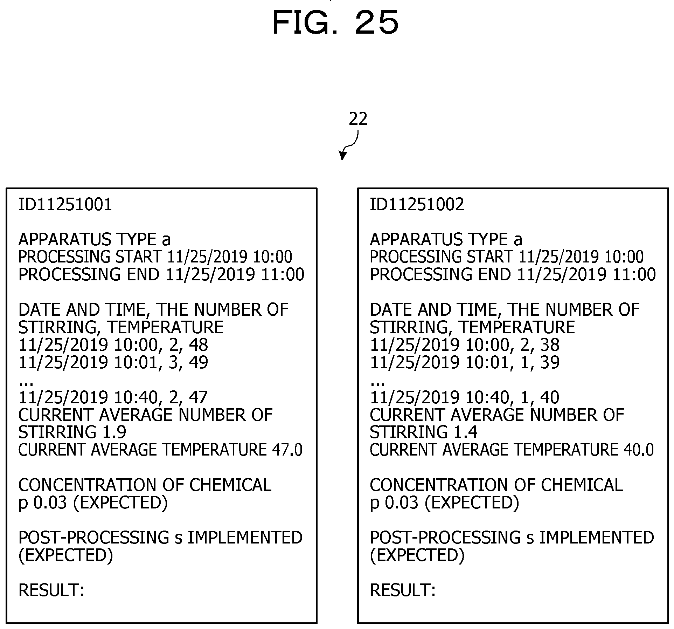

FIG. 25 is an explanatory diagram for describing a specific example of the input data 22. As illustrated in FIG. 25, the input data 22 is data indicating a current situation (feature amount) of each of manufacturing processes (1251001, 1251002, ...) as prediction targets to which identification information (ID) is assigned.

Based on the data definition 27, the input unit 11 converts a current variable value of the manufacturing process in accordance with an input format of the model M1. Next, the prediction unit 14 performs prediction by applying the converted data to the model M1.

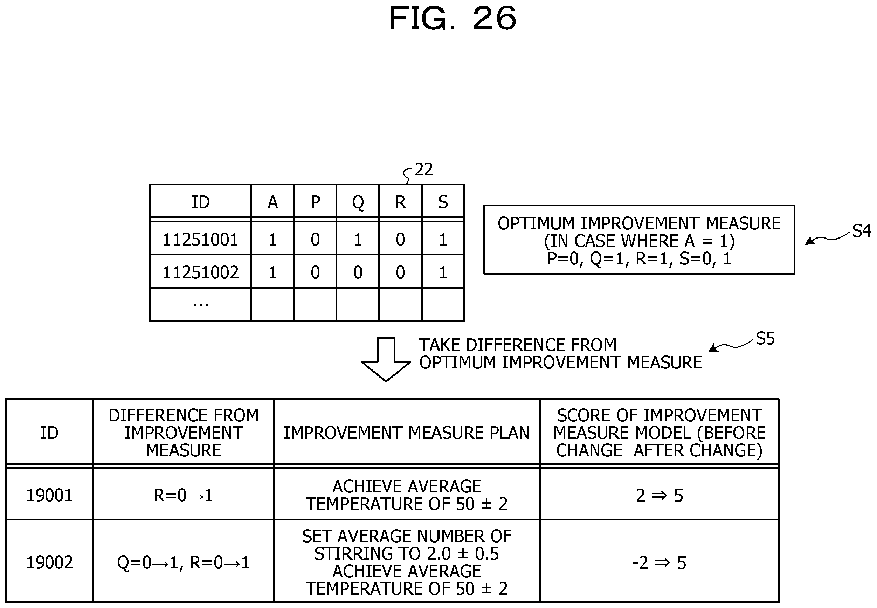

FIG. 26 is an explanatory diagram for describing a specific example of the improvement measure plan. As illustrated in FIG. 26, the prediction unit 14 substitutes a current value of an uncontrollable variable (for example, A = 1) for each of the manufacturing processes (1251001, 1251002, ...), and then optimizes the prediction score in the score function, to decide remaining variable value assignment (S4). For example, for the manufacturing process (1251001), P = 0, Q = 1, R = 1, and S = 0, which is an optimum combination of feature amounts (optimum improvement measure plan) in a case where A = 1, is obtained.

Next, the prediction unit 14 takes a difference between the optimum improvement measure plan and current values of the variables for the manufacturing process, and obtains an improvement measure plan for proposing as the policy and a score obtained from the score function (before change ⇒ after change) (S5).

For example, for the manufacturing process (1251001), the difference between the optimum improvement measure (P = 0, Q = 1, R = 1, and S = 0) and the current values is R = 0 → 1. This R = 0 → 1 corresponds to "achieve average temperature of 50 ± 2" according to the data definition 27. Therefore, the prediction unit 14 creates the "achieve average temperature of 50 ± 2" according to the difference as the improvement measure plan for the manufacturing process (1251001).

Similarly, for the manufacturing process (1251002), the differences between the optimum improvement measure plan (P = 0, Q = 1, R = 1, and S = 0) and the current values are Q = 0 → 1 and R = 0 → 1. These Q = 0 → 1 and R = 0 → 1 correspond to "set an average number of stirring to 2.0 ± 0.5" and "achieve average temperature of 50 ± 2" according to the data definition 27. Therefore, the prediction unit 14 creates the "set an average number of stirring to 2.0 ± 0.5" and the "achieve average temperature of 50 ± 2" according to the difference as the improvement measure plan for the manufacturing process (1251002).

It is unclear whether or not the improvement measure plan created here is difficult for each manufacturing process to implement. Thus, the determination unit 15 determines appropriateness of the improvement measure plan created by the prediction unit 14 based on the performance data 25 indicating the past performances.

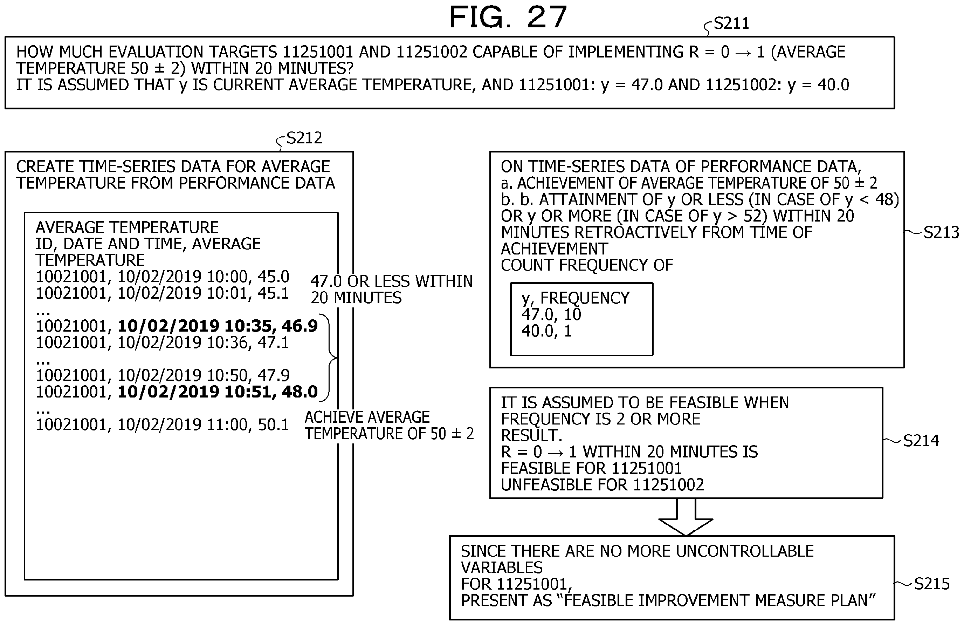

FIG. 27 is an explanatory diagram for describing a specific example of a feasible improvement measure plan. As illustrated in FIG. 27, the determination unit 15 determines appropriateness of the improvement measure plan by determining how much the manufacturing processes (1251001 and 1251002) as the evaluation targets may implement R = 0 → 1 (achieve average temperature of 50 ± 2) within 20 minutes (S211). Here, it is assumed that y is current average temperature, and 1251001: y = 47.0 and 1251002: y = 40.0.

Next, the determination unit 15 creates time-series data for the average temperature from the performance data 25 (S212). Next, on the time-series data of the performance data 25, the determination unit 15 counts an appearance frequency of a. achievement of average temperature of 50 ± 2, and b. attainment of y or less (in the case of y < 48) or y or more (in the case of y > 52) within 20 minutes retroactively from the time of the achievement (S213). Here, it is assumed that the appearance frequency of 10 is obtained in the case where y is 47.0, and the appearance frequency of 1 is obtained in the case where y is 40.0.

Next, the determination unit 15 determines whether or not the obtained appearance frequency satisfies a predetermined condition, and determines appropriateness of the improvement measure plan. For example, in a case where it is assumed to be feasible when the appearance frequency is 2 or more, the determination unit 15 determines 1251001 as feasible (improvement measure plan is appropriate), and 1251002 as unfeasible (improvement measure plan is inappropriate) (S214).

Here, since there are no uncontrollable variables for the manufacturing process (1251001), the output unit 16 presents the created improvement measure plan as a "feasible improvement measure plan" (S215).

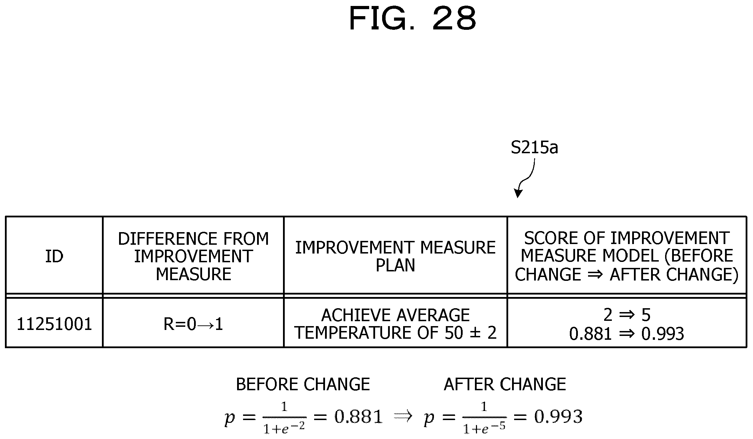

FIG. 28 is an explanatory diagram for describing a specific example of the improvement measure plan and the score. As illustrated in FIG. 28, the prediction unit 14 outputs the result data 26 including the improvement measure plan determined by the determination unit 15 to be appropriate, the score obtained from the score function (before change ⇒ after change), and a passing probability (probability of achieving the target label (pass)) before and after implementation of the improvement measure plan (S215a). Note that the probability of achieving the target label before and after implementation of the improvement measure plan is calculated at the time of prediction by the prediction unit 14 applying the expression (p = 1/(1 + e^{-z})) of the pass/fail determination model.

Next, with reference to the result data 26, the output unit 16 presents the improvement measure for achieving a pass in the manufacturing process (1251001) on a display or the like.

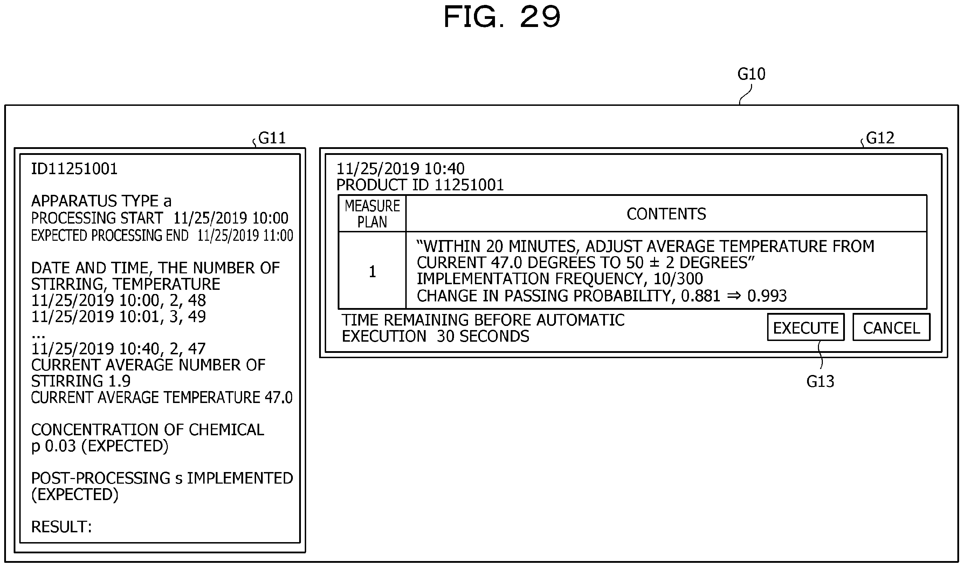

FIG. 29 is an explanatory diagram for describing an example of a display screen. As illustrated in FIG. 29, the output unit 16 displays, on a display screen G10, input contents G11 of the input data 22 of the manufacturing process (1251001) and policy contents G12 based on the result data 26. Specifically, the policy contents G12 include, for the manufacturing process (1251001), an improvement measure plan such as "within 20 minutes, adjust average temperature from current 47.0 degrees to 50 ± 2 degrees", the number of past performances, and a passing probability before and after implementation of the improvement measure plan.

Note that the display screen G10 may include an instruction button G13 for instructing control of the manufacturing apparatus in the policy contents G12. By operating the instruction button G13, a user may instruct manufacturing according to contents of the policy contents G12.

Note that, for the manufacturing process (1251002), since there is a variable whose appearance frequency does not satisfy the predetermined condition, the improvement measure plan is re-created.

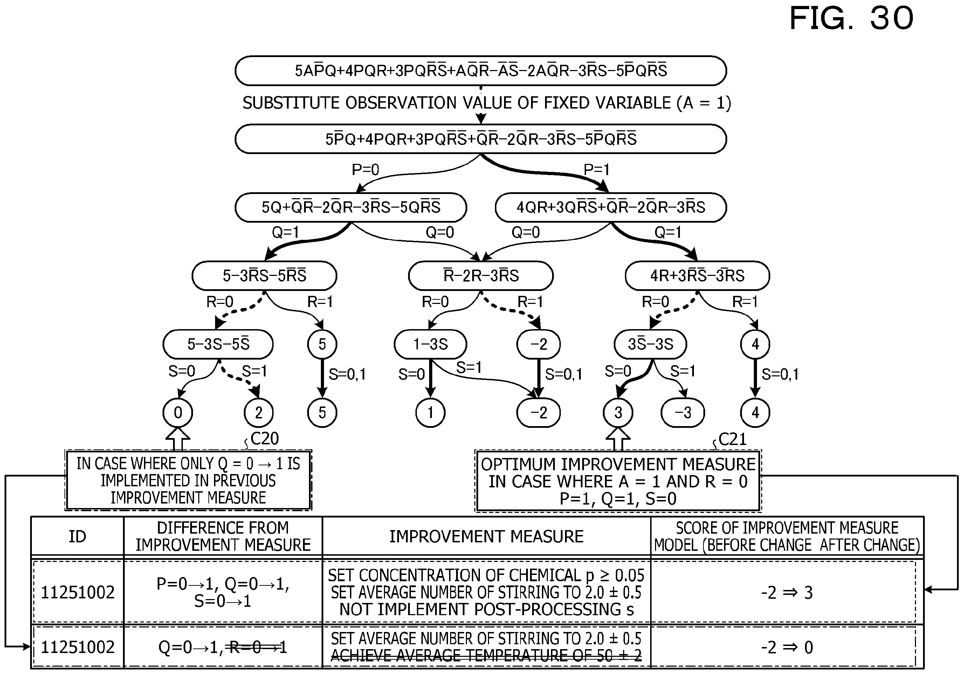

FIG. 30 is an explanatory diagram for describing the re-creation of the improvement measure plan. As illustrated in FIG. 30, for the manufacturing process (1251002), the variable (R) whose appearance frequency does not satisfy the predetermined condition is set as an uncontrollable variable to re-create the improvement measure plan. Specifically, the prediction unit 14 substitutes a current value (0) by setting the variable (R) as an uncontrolled item, and re-creates the improvement measure plan. With this configuration, the prediction unit 14 obtains P = 1, Q = 1, and S = 0 as an optimum improvement measure in a case where A = 1 and R = 0 (C21).

Therefore, for the manufacturing process (1251002), as the differences between the optimum improvement measure plan (P = 1, Q = 1, and S = 0) and the current values, P = 0 → 1, Q = 0 → 1, and S = 0 → 1 are obtained. According to the data definition 27, these differences correspond to "set concentration of the chemical p ≥ 0.05", "set an average number of stirring to 2.0 ± 0.5", and "not implement the post-processing s*"*. Therefore, the prediction unit 14 re-creates the "set concentration of the chemical p ≥ 0.05", the "set an average number of stirring to 2.0 ± 0.5", and the "not implement the post-processing s*"* according to the difference as the improvement measure plan for the manufacturing process (1251002).

In the improvement measure plan re-created such as this C21, the score before change ⇒ after change by the score function is improved from -2 to 3. On the other hand, in a case where only Q = 0 → 1 which may be implemented in the previous improvement measure plan in C20 is implemented, the score before change ⇒ after change by the score function is improved only from -2 to 0. Therefore, by re-creating the improvement measure plan as described above, it is possible to present the improvement measure plan closer to the target label (pass).

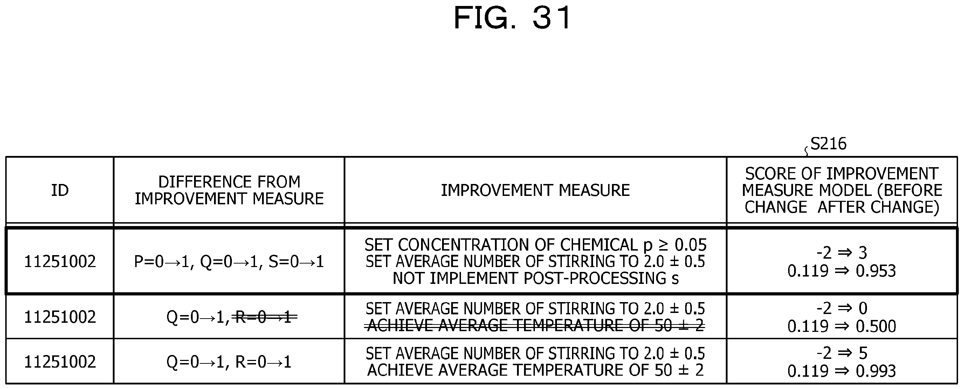

FIG. 31 is an explanatory diagram for describing a specific example of the improvement measure plan and the score. As illustrated in FIG. 31, the prediction unit 14 outputs, for each created improvement measure plan, the result data 26 including the score obtained from the score function (before change ⇒ after change) and a passing probability (probability of achieving the target label (pass)) before and after implementation of the improvement measure plan (S216).

Next, with reference to the result data 26, the output unit 16 presents the improvement measure for achieving a pass in the manufacturing process (1251002) on a display or the like.

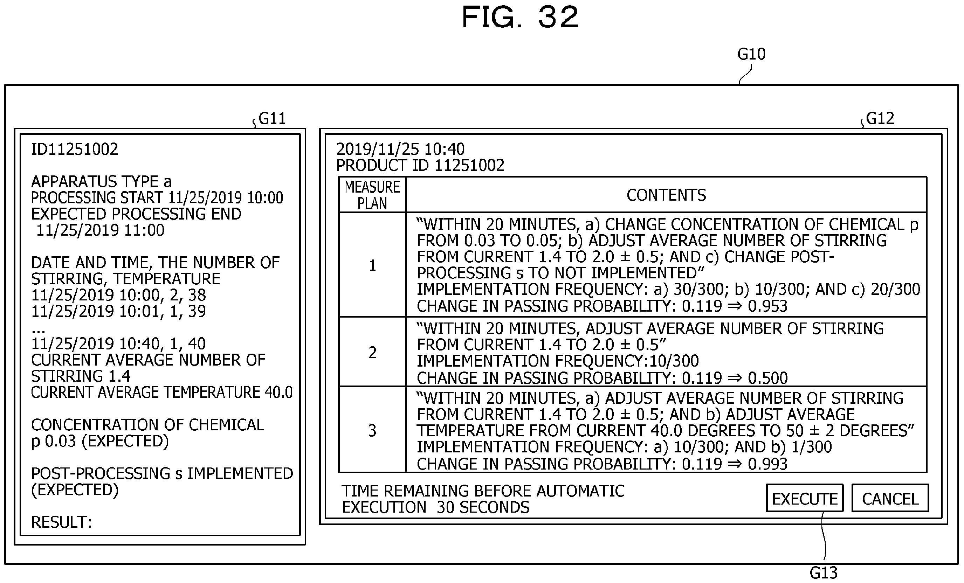

FIG. 32 is an explanatory diagram for describing an example of the display screen. As illustrated in FIG. 32, the output unit 16 displays, on the display screen G10, the input contents G11 of the input data 22 of the manufacturing process (1251002) and the policy contents G12 based on the result data 26. Specifically, the output unit 16 presents a plurality of policies created for the manufacturing process (1251002) in order of score as the policy contents G12. A user may select a desired policy from among the plurality of policies and then operate the instruction button G13 to instruct manufacturing according to the selected policy.

As described above, the control unit 10 of the information processing apparatus 1 lists combinations of feature amounts that are correlated with a target label. Furthermore, the control unit 10 creates a policy for achieving the target label for a prediction target based on a difference between the listed combinations of the feature amounts and a combination of feature amounts of the prediction target. Furthermore, the control unit 10 determines appropriateness of the created policy based on performance information (performance data 25) indicating past performances.

Therefore, the information processing apparatus 1 may determine and present a highly feasible policy that is likely to be implemented in the past performances as being appropriate. With this configuration, a user may act (for example, take measures to prepare for an examination to pass the examination, perform process management to manufacture good products, and the like) to achieve the target label based on the highly feasible policy.

Furthermore, the control unit 10 creates a combination of feature amounts corresponding to the difference as the policy. With this configuration, a user may know the combination of the feature amounts that serves as the target label as the policy, and may take, based on this policy, an action so as to achieve the target label for the combination of the feature amounts of the prediction target.

Furthermore, the control unit 10 determines that the policy is appropriate in a case where an event related to the combination of the feature amounts included in the created policy occurs at a predetermined occurrence frequency in the past performances included in the performance data 25. With this configuration, the information processing apparatus 1 may present a more feasible policy (combination of feature amounts with changed performance) that occurs at a predetermined occurrence frequency in the past performances.

Furthermore, the control unit 10 re-lists the combinations of the feature amounts by setting, as uncontrollable, the feature amounts included in the combination in a case where the event related to the combination of the feature amounts included in the created policy does not occur at the predetermined occurrence frequency in the past performances included in the performance data 25. Next, the control unit 10 re-creates the policy based on a difference between the re-listed combinations of the feature amounts and the combination of the feature amounts of the prediction target.

For example, for the combination of the feature amounts related to the event that does not occur at the predetermined occurrence frequency in the past performances, changing the feature amounts may be considered difficult to be implemented. Therefore, it is possible to search for a highly feasible policy (combination of feature amounts) by re-listing the combinations of the feature amounts by setting such feature amounts as uncontrollable.

Furthermore, the control unit 10 creates a plurality of the policies with a probability of achieving the target label, and outputs a policy determined to be appropriate among the plurality of created policies together with the probability. With this configuration, a user may select, with reference to the probability, a policy to actually use from among the plurality of policies.

Note that each of the illustrated components in each of the devices does not necessarily have to be physically configured as illustrated in the drawings. In other words, specific modes of distribution and integration of the respective devices are not limited to those illustrated, and all or a part of the devices may be configured by being functionally or physically distributed and integrated in an optional unit depending on various loads, use situations, and the like.

Furthermore, all or an optional part of various processing functions of the input unit 11, the hypothesis generation unit 12, the learning unit 13, the prediction unit 14, the determination unit 15, and the output unit 16 performed by the control unit 10 of the information processing apparatus 1 may be executed on a CPU (or a microcomputer such as an MPU or a micro controller unit (MCU)). Furthermore, it is needless to say that all or an optional part of various processing functions may be executed on a program analyzed and executed by a CPU (or a microcomputer such as an MPU or an MCU) or on hardware by wired logic. Furthermore, various processing functions performed by the information processing apparatus 1 may be executed by a plurality of computers in cooperation through cloud computing.

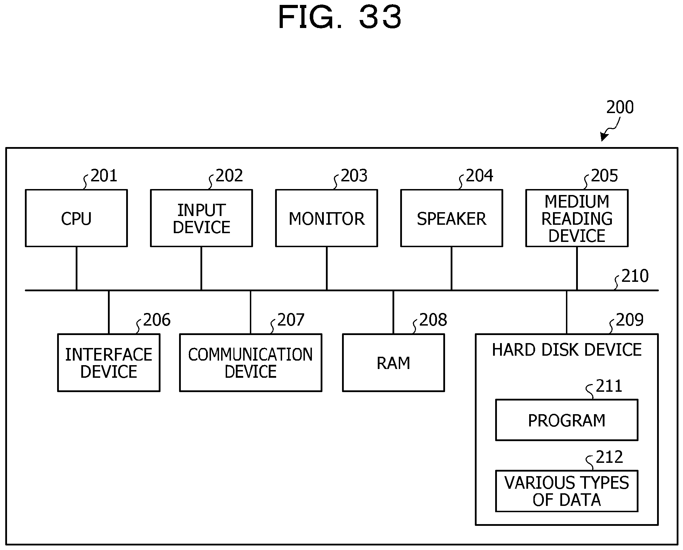

Meanwhile, various types of processing described in the embodiment described above may be implemented by executing a program prepared beforehand on a computer. Thus, hereinafter, an example of a computer configuration (hardware) that executes a program having functions similar to the functions of the embodiment described above will be described. FIG. 33 is a block diagram illustrating an example of the computer configuration.

As illustrated in FIG. 33, a computer 200 includes a CPU 201 that executes various types of arithmetic processing, an input device 202 that receives data input, a monitor 203, and a speaker 204. Furthermore, the computer 200 includes a medium reading device 205 that reads a program and the like from a storage medium, an interface device 206 to be connected to various devices, and a communication device 201 to be connected to and communicate with an external device in a wired or wireless manner. Furthermore, the information processing apparatus 1 includes a RAM 208 that temporarily stores various types of information, and a hard disk device 209. Furthermore, each of the units (201 to 209) in the computer 200 is connected to a bus 210.

The hard disk device 209 stores a program 211 for executing various types of processing in the functional configuration (for example, the input unit 11, the hypothesis generation unit 12, the learning unit 13, the prediction unit 14, the determination unit 15, and the output unit 16) described in the embodiment described above. Furthermore, the hard disk device 209 stores various types of data 212 that the program 211 refers to. The input device 202 receives, for example, input of operation information from an operator. The monitor 203 displays, for example, various screens operated by the operator. The interface device 206 is connected to, for example, a printing device or the like. The communication device 201 is connected to a communication network such as a local area network (LAN) and exchanges various types of information with an external device via the communication network.

The CPU 201 reads the program 211 stored in the hard disk device 209 and develops and executes the program 211 on the RAM 208 so as to perform various types of processing related to the functional configuration (for example, the input unit 11, the hypothesis generation unit 12, the learning unit 13, the prediction unit 14, the determination unit 15, and the output unit 16) described above. Note that the program 211 does not have to be stored in the hard disk device 209. For example, the program 211 stored in a storage medium readable by the computer 200 may be read and executed. For example, the storage medium readable by the computer 200 corresponds to a portable recording medium such as a CD-ROM, a DVD disk, or a universal serial bus (USB) memory, a semiconductor memory such as a flash memory, a hard disk drive, or the like. Furthermore, the program 211 may be stored in a device connected to a public line, the Internet, a LAN, or the like, and the computer 200 may read the program 211 from the device to execute the program 211.

### CITATION LIST

### PATENT DOCUMENT

Patent Document 1: Japanese Laid-open Patent Publication No. 2019-124990

### REFERENCE SIGNS LIST

1lnformation processing apparatus
10Control unit
11lnput unit
12Hypothesis generation unit
13Learning unit
14Prediction unit
15Determination unit
16Output unit
20Storage unit
21Training data
22lnput data
23Hypothesis set data
24Weight data
25Performance data
26Result data
27Data definition
200Computer
201CPU
202!nput device
203Monitor
204Speaker
205Medium reading device
206Interface device
207Communication device
208RAM
209Hard disk device
210Bus
211Program
212Various types of data
C01 to C09, R1, R2Combination
G10Display screen
G11Input content
G12Policy content
G13lnstruction button
H1 to H11Hypothesis
M1Model

## Claims

1. A prediction program comprising instructions which, when executed by a computer, cause the computer to perform processing including:
listing combinations of feature amounts that are correlated with a target label;
creating a policy to achieve the target label for a prediction target based on a difference between the listed combinations of the feature amounts and a combination of feature amounts of the prediction target; and
determining appropriateness of the created policy based on performance information that indicates past performances.

2. The prediction program according to claim 1, wherein,
in the processing of creating, a combination of feature amounts that corresponds to the difference is created as the policy.

3. The prediction program according to claim 2, wherein,
in the processing of determining, it is determined that the policy is appropriate in a case where an event related to the combination of the feature amounts included in the policy occurs at a predetermined occurrence frequency in the past performances included in the performance information.

4. The prediction program according to claim 3, wherein,
in the processing of listing, the combinations of the feature amounts are re-listed by setting, as uncontrollable, the feature amounts included in the combinations in a case where the event related to the combination of the feature amounts included in the policy does not occur at the predetermined occurrence frequency in the past performances included in the performance information, and
in the processing of creating, the policy is re-created based on a difference between the re-listed combinations of the feature amounts and the combination of the feature amounts of the prediction target.

5. The prediction program according to any one of claims 1 to 4, wherein,
in the processing of creating, a plurality of the policies is created with a probability of achieving the target label, and
a computer is further caused to execute processing of outputting a policy determined to be appropriate among the plurality of created policies together with the probability.

6. The prediction program according to any one of claims 1 to 5, wherein
the label is a result associated with a predetermined event of the prediction target or a target different from the prediction target, and
the performance information includes at least performance information regarding the predetermined event of the prediction target or the target different from the prediction target.

7. A prediction method implemented by a computer, the prediction method comprising:
listing combinations of feature amounts that are correlated with a target label;
creating a policy to achieve the target label for a prediction target based on a difference between the listed combinations of the feature amounts and a combination of feature amounts of the prediction target; and
determining appropriateness of the created policy based on performance information that indicates past performances.

8. The prediction method according to claim 7, wherein,
in the processing of creating, a combination of feature amounts that corresponds to the difference is created as the policy.

9. The prediction method according to claim 8, wherein,
in the processing of determining, it is determined that the policy is appropriate in a case where an event related to the combination of the feature amounts included in the policy occurs at a predetermined occurrence frequency in the past performances included in the performance information.

10. The prediction method according to claim 9, wherein,
in the processing of listing, the combinations of the feature amounts are re-listed by setting, as uncontrollable, the feature amounts included in the combinations in a case where the event related to the combination of the feature amounts included in the policy does not occur at the predetermined occurrence frequency in the past performances included in the performance information, and
in the processing of creating, the policy is re-created based on a difference between the re-listed combinations of the feature amounts and the combination of the feature amounts of the prediction target.

11. The prediction method according to any one of claims 7 to 10, wherein,
in the processing of creating, a plurality of the policies is created with a probability of achieving the target label, and
a computer is further caused to execute processing of outputting a policy determined to be appropriate among the plurality of created policies together with the probability.

12. The prediction method according to any one of claims 7 to 11, wherein
the label is a result associated with a predetermined event of the prediction target or a target different from the prediction target, and
the performance information includes at least performance information regarding the predetermined event of the prediction target or the target different from the prediction target.

13. A prediction apparatus comprising a control unit that executes processing including:
listing combinations of feature amounts that are correlated with a target label;
creating a policy to achieve the target label for a prediction target based on a difference between the listed combinations of the feature amounts and a combination of feature amounts of the prediction target; and
determining appropriateness of the created policy based on performance information that indicates past performances.

14. The prediction apparatus according to claim 13, wherein,
in the processing of creating, a combination of feature amounts that corresponds to the difference is created as the policy.

15. The prediction apparatus according to claim 14, wherein,
in the processing of determining, it is determined that the policy is appropriate in a case where an event related to the combination of the feature amounts included in the policy occurs at a predetermined occurrence frequency in the past performances included in the performance information.

16. The prediction apparatus according to claim 15, wherein,
in the processing of listing, the combinations of the feature amounts are re-listed by setting, as uncontrollable, the feature amounts included in the combinations in a case where the event related to the combination of the feature amounts included in the policy does not occur at the predetermined occurrence frequency in the past performances included in the performance information, and
in the processing of creating, the policy is re-created based on a difference between the re-listed combinations of the feature amounts and the combination of the feature amounts of the prediction target.

17. The prediction apparatus according to any one of claims 13 to 16, wherein,
in the processing of creating, a plurality of the policies is created with a probability of achieving the target label, and
a computer is further caused to execute processing of outputting a policy determined to be appropriate among the plurality of created policies together with the probability.

18. The prediction apparatus according to any one of claims 13 to 17, wherein
the label is a result associated with a predetermined event of the prediction target or a target different from the prediction target, and
the performance information includes at least performance information regarding the predetermined event of the prediction target or the target different from the prediction target.
